(19) Europäisches Patentamt
European Patent Office
Office européen des brevets

(11) **EP 2 979 371 B1**

(12) **EUROPÄISCHE PATENTSCHRIFT**

(45) Veröffentlichungstag und Bekanntmachung des Hinweises auf die Patenterteilung:
**23.09.2020   Patentblatt 2020/39**

(21) Anmeldenummer: **14712272.5**

(22) Anmeldetag: **21.03.2014**

(51) Int Cl.:
*H04B 7/06* (2006.01)     *H04B 7/08* (2006.01)
*H04W 48/18* (2009.01)    *H04W 72/06* (2009.01)
*H04W 36/24* (2009.01)    *H04W 88/06* (2009.01)
*H04W 76/16* (2018.01)

(86) Internationale Anmeldenummer:
**PCT/EP2014/055689**

(87) Internationale Veröffentlichungsnummer:
**WO 2014/154576 (02.10.2014 Gazette 2014/40)**

(54) **VERFAHREN UND VORRICHTUNG ZUR ÜBERTRAGUNGSKANALWAHL IN EINER NETZWERK-FUNKVERBINDUNG**

METHOD AND DEVICE FOR SELECTING TRANSMISSION CHANNELS IN A NETWORK RADIO CONNECTION

PROCÉDÉ ET DISPOSITIF POUR LE CHOIX D'UN CANAL DE TRANSMISSION DANS UN RÉSEAU DE RADIOCOMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2013   DE 102013205349**
**09.08.2013   DE 102013215728**
**09.08.2013   DE 102013215729**

(43) Veröffentlichungstag der Anmeldung:
**03.02.2016   Patentblatt 2016/05**

(73) Patentinhaber: **Bayerische Motoren Werke Aktiengesellschaft**
**80809 München (DE)**

(72) Erfinder:
• KLEMP, Oliver
  81669 München (DE)
• EKIZ, Levent-Yusuf
  81373 München (DE)
• LOTTERMANN, Christian
  80636 München (DE)
• POSSELT, Adrian
  80939 München (DE)

(56) Entgegenhaltungen:
US-A1- 2008 242 251     US-A1- 2012 220 238
US-A1- 2013 072 189     US-B2- 8 400 974

**Beschreibung**

Die Erfindung betrifft ein Verfahren und eine Vorrichtung zur Auswahl eines Übertragungskanals in einer Netzwerk-Funkverbindung. Die Erfindung betrifft insbesondere die Auswahl eines Übertragungskanals bzw. eines Verbindungsnetzes in einem drahtlosen Kommunikationsnetz auf Basis eines Mehrantennen-Übertragungsverfahrens, bei dem Funksignale zwischen mindestens einer Funk-Basisstation und einem mobilen Endgerät, die mindestens zwei Antennen aufweisen, übertragen werden. Die Erfindung betrifft weiterhin insbesondere die Auswahl eine Funkübertragungskanals aus mehreren Funkkanälen, die jeweils unterschiedliche Übertragungstechnologien aufweisen.

Bei der Auswahl des Übertragungskanals bzw. des Verbindungsnetzes in einem Mobilfunknetz wird regelmäßig entschieden, mit welcher stationären Basisstation ein Mobilfunkgerät, beispielsweise ein Mobiltelefon, zur Datenübertragung kommuniziert. Ein Wechsel des Übertragungskanals kann beispielsweise notwendig werden, wenn sich das Mobilfunkgerät in einem Bereich befindet, in dem Signale zweier Basisstationen empfangen werden können. Insbesondere ist dies beispielsweise notwendig, wenn sich das Mobilfunkgerät vom Sende/Empfangsbereich, d.h. der Mobilfunkzelle der ersten Basisstation in den Sende/Empfangsbereich der zweiten Basisstation bewegt, beispielsweise bei einer Autofahrt. Der Wechsel der Kommunikation des Mobilfunkgeräts vom Übertragungskanal mit der ersten Basisstation zum Übertragungskanal mit der zweiten Basisstation wird auch als Handover-Prozess bezeichnet.

In der US 2009/0059861A1 sind verschiedene Verfahren zur Steuerung eines Handover-Prozesses eines zellenbasierten Übertragungssystems mit einem Wechsel zwischen zwei Übertragungsfrequenzen beschrieben. In einem ersten Verfahren wird die Signalstärke auf der jeweiligen Übertragungsfrequenz am Mobilfunkgerät ermittelt und die Verbindung über diejenige Frequenz aufgebaut, die die größere Signalstärke aufweist. In einem zweiten Verfahren wird die Signalqualität der jeweiligen Übertragungsfrequenz am Mobilfunkgerät ermittelt und die Verbindung über die Übertragungsfrequenz mit der besseren Signalqualität aufgebaut.

In der US 2011/0267969 A1 ist ebenfalls ein Handover-Prozess zwischen Mobilfunkzellen beschrieben, bei dem eine Reihe von Empfangssignal-Parametern zur Steuerung des Prozesses wie z.B. die Signalstärke und das Signal-zu-Rausch-Verhältnis berücksichtigt werden.

Mobile Endgeräte wie zum Beispiel Mobiltelefone, Smart Phones, Tablet-PCs oder Laptops sind weiterhin zunehmend in der Lage, insbesondere drahtlos über verschiedene Kommunikationssysteme zu kommunizieren, insbesondere drahtlos über Funkkanäle verschiedener Übertragungstechnologien zu kommunizieren. Sie sind dazu an entsprechende elektronische kommunikationssystemspezifische Komponenten bzw. Technologien geknüpft und weisen dazu der jeweiligen Technologie entsprechende elektronische Komponenten auf. Eine erste solche Kommunikationssystem-Technologie ist beispielsweise eine Mobilfunk-Technologie zur Datenübertragung auf Basis entsprechender Mobilfunk-Standards sein, wie zum Beispiel Global System for Mobile Communications (GSM), Universal Mobile Telecommunications System (UMTS) oder Long Term Evolution (LTE). Eine weitere drahtlose Übertragungstechnologie ist eine Technologie zum Betrieb eines Computernetzwerks, beispielsweise für ein Wireless Local Network (WLAN) entsprechend dem IEEE 802.11x Standard. Eine weitere drahtlose Übertragungstechnologie für mobile Endgeräte ist zum Beispiel die Bluetooth-Technologie entsprechend dem Technologiestandard IEEE 802.15.1. Verschiedene Übertragungstechnologien können sich beispielsweise in den Übertragungsfrequenzen unterscheiden. Zur Steuerung der jeweiligen Datenübertragung ist zu den Übertragungstechnologien jeweils ein entsprechendes, standardisiertes Übertragungsprotokoll vorgesehen, wobei jeweils verschiedene Versionen des Standards vorgesehen sein können wie z.B. GSM 2G/3G oder IEEE 802.11a/b/n, die sich untereinander jeweils in Details für die jeweiligen Implementierungen unterscheiden.

Bei der Auswahl des Übertragungskanals bzw. des Verbindungsnetzes in einem Mobilfunknetz wird regelmäßig entschieden, mit welcher stationären Basisstation ein Mobilfunkgerät, beispielsweise ein Mobiltelefon, zur Datenübertragung kommuniziert. Ein Wechsel des Übertragungskanals kann beispielsweise notwendig werden, wenn sich das Mobilfunkgerät in einem Bereich befindet, in dem Signale zweier Basisstationen empfangen werden können. Insbesondere ist dies beispielsweise notwendig, wenn sich das Mobilfunkgerät vom Sende/Empfangsbereich, d.h. der Mobilfunkzelle der ersten Basisstation in den Sende/Empfangsbereich der zweiten Basisstation bewegt, beispielsweise bei einer Autofahrt. Der Wechsel der Kommunikation des Mobilfunkgeräts vom Übertragungskanal mit der ersten Basisstation zum Übertragungskanal mit der zweiten Basisstation und/oder zwischen Mobilfunknetzen bzw. Übertragungskanälen wird auch als horizontaler Handover-Prozess bezeichnet.

In so genannten hybriden Kommunikationsnetzwerken kann eine drahtlose Datenverbindung über Funkkanäle verschiedener Übertragungstechnologien erfolgen und/oder über verschiedene Verbindungs-Infrastrukturkomponenten.

In hybriden Kommunikationsnetzwerken ist es mitunter vorteilhaft oder sogar notwendig, die drahtlose Datenverbindung zwischen Endgeräten, Basisstationen, Vermittlungsstellen und/oder zentralen Datenquellen wahlweise und/oder parallel, ganz oder teilweise sowie dauerhaft oder temporär zwischen Funkkanälen verschiedener Übertragungstechnologien umzuschalten. Um derartige, so genannte vertikale Handover-Prozesse automatisch steuern zu können und die dazugehörigen Entscheidungen in hybriden Kommunikationsnetzwerken vorteilhaft zu treffen, werden geeignete Entscheidungskriterien bzw. Algorithmen benötigt. In hybriden Kommunikationsnetzwerken ist es ist es mitunter auch vorteilhaft oder sogar notwendig, die drahtlose Datenverbindung zwischen Endgeräten, Basisstationen, Vermittlungsstellen und/oder zentralen Datenquellen wahlweise und/oder parallel, ganz oder teilweise sowie dauerhaft oder temporär zwischen Funkkanälen verschiedener Verbindungs-Infrastruktur derselben Übertragungstechnologie umzuschalten, beispielsweise zwischen Infrastruktur-Komponenten verschiedener Mobilfunkanbieter oder zwischen Basisstationen verschiedener Mobilfunkzellen. Um derartige horizontale Handover-Prozesse automatisch steuern zu können und die dazu gehörenden Entscheidungen in hybriden Kommunikationsnetzwerken vorteilhaft zu treffen, werden ebenfalls geeignete Entscheidungskriterien bzw. Algorithmen benötigt.

Durch die immer weiter verbreitete, parallele Verfügbarkeit von statischen oder mobilen Netzwerkelementen verschiedener Verbindungstechnologien wie z.B. WLAN Elementen, beispielsweise nach den Standards IEEE 802.11x oder ETSI ITS G5 oder Mobilfunknetzen mit Mehrantennenfunk wie z.B. nach dem Standard 3GPP LTE, ergeben sich immer mehr Vernetzungsmöglichkeiten für die Anbindung des mobilen Endgeräts an ein zentrales Gerät (sog. Backend).

In der US 2008/0242251 A1 ist ein drahtloses Kommunikationssystem beschrieben, das mehrere Übertragungspfade aufweist und bei dem die jeweilige Güte der Übertragungspfade kontinuierlich überwacht wird. Anhand der Gütewerte wird eine Pfadliste erstellt, in der zur Übertragung geeignete Übertragungspfade aufgeführt sind. Anhand der Liste werden jeweilige, gelistete Pfade zur Übertragung von Daten ausgewählt. Pfade, die nicht gelistet sind, werden nicht zur Datenübertragung genutzt.

In der US 2012/0220238 A1 ist ein drahtloses Kommunikationssystem bekannt, bei dem die Signalqualität mehrerer Antennenpaare ermittelt wird und anhand der Signalqualität ein Antennenpaar für eine Signalübertragung genutzt wird.

In der US 2013/0072189 A1 ist ein zellulares Mobilfunksystem beschrieben, bei dem die Übergabe eines Teilnehmers von einer ersten Zelle zu einer zweiten Zelle auf Basis von Signalmessungen erfolgt.

In der US 8,400,974 B2 ist ein weiteres Mobilfunksystem beschrieben.

Es ist eine erste mögliche Aufgabe der Erfindung, für Kommunikationssysteme, die eine Mehrantennen-Netzwerk-Funkverbindung aufweisen, mit der Daten mittels Funksignalen zwischen mindestens einer Funk-Basisstation und einem mobilen Endgerät übertragbar sind, die jeweils mindestens zwei Antennen aufweisen, die Auswahl des Übertragungskanals so zu ermöglichen, dass eine hohe Verbindungsqualität erreicht wird.

Es ist eine zweite mögliche Aufgabe der Erfindung, in einem Kommunikationsnetzwerk, das eine drahtlose Datenverbindung über Funkkanäle verschiedener Übertragungstechnologien und/oder verschiedener Infrastruktur-Komponenten ermöglicht, eine hohe Verbindungsqualität zu erreichen.

Zumindest eine dieser Aufgaben wird jeweils durch die in den unabhängigen Patentansprüchen angegebene Erfindung gelöst. Vorteilhafte Ausführungsformen der Erfindung sind jeweils in den abhängigen Ansprüchen angegeben.

Gemäß einem ersten Aspekt der Erfindung ist zur Übertragungskanalwahl in einer Netzwerk-Funkverbindung, in der Daten mittels Funksignalen zwischen einer Funk-Basisstation und einem mobilen Endgerät übertragen werden, vorgesehen, dass

- die Funk-Basisstation und das mobile Endgerät jeweils mindestens zwei Antennen aufweisen, durch die sich für die Funkverbindung mehrere Übertragungspfade und für die Datenübertragung mindestens zwei Übertragungskanäle ausbilden, die jeweils einen oder mehrere der Übertragungspfade entsprechend einer Kanalmatrix nutzen,

- das mobile Endgerät mindestens einen Dekoder aufweist, mit dem von mindestens einer der Endgeräte-Antennen empfangene Funksignale zum Gewinnen der Daten dekodierbar sind, und

- mit der Übertragungskanalwahl entschieden wird, über welchen oder welche der Übertragungspfade und/oder mit welcher Kommunikationssystem-Technologie die Übertragung der Daten zwischen Funk-Basisstation und mobilem Endgerät erfolgt. Dabei sind folgende Schritte vorgesehen:

- von der Mobilfunk-Basisstation werden über die Übertragungspfade zum mobilen Endgerät Mobilfunksignale für erste Daten in mindestens einer Kommunikationssystem-Technologie übertragen,

- die Mobilfunksignale werden dem Dekoder übertragungskanalweise zugeführt,

- der Dekoder dekodiert die Mobilfunksignale und gewinnt dabei übertragungskanalweise die ersten Daten,

- mittels der dekodierten ersten Daten wird übertragungskanalweise mindestens ein Gütewert gebildet, der repräsentativ ist für eine Güte der Datenübertragung über den jeweiligen Übertragungskanal und

- anhand eines Vergleichs der Gütewerte der Übertragungskanäle erfolgt die Übertragungskanalwahl zur nachfolgenden Übertragung zweiter Daten, die Nutzdaten bilden.

Der erste Aspekt der Erfindung beruht auf der Erkenntnis, dass es für eine optimale Auswahl des jeweiligen Übertragungskanals günstiger ist, kanalspezifische Gütewerte zu bestimmen als lediglich signalspezifische Werte wie Leistungspegel oder Signal-zu-Rausch-Verhältnis. Die Erfindung beruht auch auf der Erkenntnis, dass die Übertragungskanalwahl auf Basis kanalspezifischer Gütewerte dann besonders vorteilhaft ist, wenn das mobile Endgerät über mindestens zwei Antennen verfügt.

Dabei unterscheiden sich die signalspezifischen Werte aufgrund der räumlichen Nähe der Empfangs-Antennen häufig weniger als kanalspezifischen Gütewerte, die auch von anderen Faktoren abhängen wie beispielsweise der auf dem jeweiligen Kanal verwendeten Kommunikationssystem-Technologie.

Weiterhin wurde mit diesem Aspekt der Erfindung erkannt, dass mit einer Übertragungskanalwahl auf Basis des Gütewerts eine effizientere Ausnutzung von Funkressourcen möglich ist als wenn die Übertragungskanalwahl auf Basis von leistungsbezogenen Schwellwert-Entscheidungen erfolgt, weil die Leistungen häufig von räumlichen Einflüssen wie Reflexion, Beugung und/oder Streuung der elektromagnetischen Wellen abhängen. Das erfindungsgemäße Vorgehen kann sich endgeräteseitig in Form einer erhöhten Funktionsqualität auswirken und netzbetreiberseitig in einer verbesserten Nutzung der verfügbaren spektralen Effizienz, d.h. einer höheren übertragbaren Informationsmenge pro Zeit und pro Hertz Bandbreite. Zudem können mit der Erfindung vorteilhaft die Robustheit der Funkverbindung gesteigert werden sowie die Übertragungskapazität und die Reichweite zwischen Infrastruktur und mobilem Endgerät erhöht werden. Seitens des Endgeräts kann weiterhin vorteilhaft die benötigte Leistungsaufnahme reduziert werden und somit ggf. die Laufzeit des Akkus erhöht werden.

In einem vorteilhaften Ausführungsbeispiel des ersten Aspekts der Erfindung ist zumindest eine Antenne der Funk-Basisstation und eine Antenne des mobilen Endgeräts zur Übertragung von Daten auf Basis von mindestens zwei unterschiedlichen Kommunikationssystem-Technologien eingerichtet. Eine oder mehrere der Antennen können gleichzeitig bzw. parallel für zwei Kommunikationssystem-Technologien, z.B. für die GSM- und LTE-Technologien genutzt werden. Das mobile Endgerät kann insbesondere mindestens zwei Antennen für unterschiedliche Kommunikationssystem-Technologien aufweisen.

Der Gütewert kann auf Basis physikalischer Eigenschaften des Übertragungspfades und/oder des Kanals und insbesondere aus gewichteten Kanalparametern gebildet werden. Dazu gibt es eine Vielzahl geeigneter physikalischer Größen, von denen hier lediglich beispielhaft die über den Pfad bzw. Kanal erzielte absolute Datenübertragungsrate, eine auf Basis der Kanalmatrix ermittelte Konditionszahl des Übertragungskanals und/oder die spektrale Effizienz des Pfads bzw. Kanals genannt seien.

Für die Entscheidung, welcher Übertragungskanal verwendet wird, kann zu mehreren verfügbaren Übertragungskanäle eine Übertragungsmatrix mit zugehörigen Kanalparametern gebildet werden, insbesondere zu vorausgewählten Kanälen oder zu allen in der Funkverbindung verfügbaren Kanälen. Die Übertragungsbzw. Kanalmatrix kann komplexe Kanalgewichte zwischen allen Kombinationen an Sende- und an Empfangsantennen in einem Mehrantennen-Übertragungssystem umfassen. In einem 2x2-Übertragungssystem mit zwei Sende - und zwei Empfangsantennen sind dann beispielsweise insgesamt 4 komplexe Übertragungsparameter auszuwerten.

Mit der Erfindung ist es insbesondere möglich, vertikale Handover-Entscheidungen in hybriden Kommunikationsnetzwerken vorteilhaft zu treffen, bei denen entschieden wird, nach welchem mit dem Übertragungskanal verbundenen Funkübertragungsstandard und/oder mit welcher Kommunikationssystem-Technologie die Übertragung von Nutzdaten zwischen Mobilfunk-Basisstation und mobilem Endgerät erfolgt. Durch die immer weiter verbreitete, parallele Verfügbarkeit von statischen oder mobilen Netzwerkelementen verschiedener Verbindungstechnologien wie z.B. WLAN Elementen, beispielsweise nach den Standards IEEE 802.11x oder ETSI ITS G5 oder Mobilfunknetzen mit Mehrantennenfunk wie z.B. nach dem Standard 3GPP LTE, ergeben sich immer mehr Vernetzungsmöglichkeiten für die Anbindung des mobilen Endgeräts an ein zentrales Gerät (sog. Backend). Erfindungsgemäß wurde erkannt, dass bei derartigen Funk-Netzwerken die Berücksichtigung von physikalischen Kanaleigenschaften an Stelle rein leistungsbasierter Kanalparameter für die Auswahl des Übertragungskanals einschließlich der damit verbundenen Kommunikationssystem-Technologie und/oder dem damit verbundenen Funkübertragungsstandard, d.h. für eine vertikale Handover-Entscheidung, bessere Übertragungseigenschaften erreichbar sind.

Zur Bestimmung des Gütewerts können Kanalparameter der Übertragungsmatrix ermittelt werden. In einem vorteilhaften Ausführungsbeispiel der Erfindung kann zur Bestimmung des Gütewerts eine Kanalschätzung erfolgen. Dazu können beispielsweise Kanalparameter der Übertragungsmatrix endgeräteseitig am Ausgang des die jeweiligen Funksignale dekodierenden Decoders geschätzt werden. Die Schätzung von Kanalparametern erfolgt beispielsweise auf Basis von Analysewerten eines Kommunikationsmodems, das eine endliche Bandbreite mit einer endlichen Messzeit und einer endlichen Auflösung aufweist. Die Kanalschätzung kann beispielsweise eine Integration, insbesondere Kurzzeit-Integration, über eine vorgegebene, begrenzte Empfangsbandbreite und eine endliche Messzeit, beispielsweise über zumindest einen Teil einer Präambel, d.h. über eine bekannte Bitsequenz eines für die Funkverbindung verwendeten Übertragungsprotokolls und/oder anderen Parametern des jeweiligen Netzwerks umfassen, insbesondere auf dessen physikalischer Netzwerkebene (PHY) im OSI (Open Systems Interconnection Model) Schichten-Modell. Der Gütewert kann insbesondere benutzt werden um Kanaleinflüsse auf die Datenübertragung bei der Demodulation der empfangenen Funksignale bei der Kanalwahl berücksichtigen zu können. Die Kanalschätzung kann dazu insbesondere regelmäßig nach vorgegebenen Regeln, beispielsweise in regelmäßigen Zeitabständen erfolgen. Auf Basis dieser Kanalinformationen ist eine erweiterte Bewertung der Funknetzqualität möglich, wobei eine rein passive Bewertung der Übertragungsparameter seitens des mobilen Endgeräts erfolgen kann. Dadurch ist keine zusätzliche Systembandbreite erforderlich.

Die mit der Erfindung erreichbare, verbesserte Beurteilung der Funknetzqualität bzw. Qualität des Übertragungskanals kann vorteilhaft für vertikale Handover-Entscheidungen bei einem Wechsel der Verbindungstechnologie zwischen Funk-Basisstation bzw. Infrastruktur und mobilem Endgerät genutzt werden. Dies führt zu höherer Datenübertragungsrate und zu höherer Robustheit der Datenübertragung. Die verbesserte Beurteilung der Funknetz- bzw. Übertragungskanalqualität kann zudem für die Ableitung horizontaler Handover-Entscheidungen, das heißt zum Wechsel zwischen zwei Netzwerken derselben Verbindungstechnologie, also zum Beispiel bei einem Wechsel zwischen überlappenden oder aneinander grenzenden Mobilfunkzellen desselben Mobilfunkstandards wie GSM, oder zwischen zwei WLAN-Netzwerken, verwendet werden. Mit der Erfindung ist somit eine vorteilhafte zweifache Nutzung der verfügbaren Informationen über die Qualität des jeweiligen Übertragungskanals bzw. Funknetzes möglich.

Mit dem ersten Aspekt der Erfindung sind folgende weitere Vorteile erreichbar:

- Die Übertragungskapazität kann gesteigert werden trotz vergleichsweise geringerer Empfangs-Leistungspegel am mobilen Endgerät.
- Erhöhte Robustheit der Funkverbindung durch Bereitstellung derselben Funktionsqualität bei vergleichsweise geringeren Empfangs- Leistungspegeln am mobilen Endgerät.
- Erhöhte Reichweite des Funk Systems bei gleichbleibender Funktionsqualität.
- Kompensation von Übertragungs-Unsymmetrien infolge von zum Beispiel unterschiedlichen Antennenstandorten oder unterschiedlichen Antennen-Effizienzen durch Auswertung der Information der gesamten Kanalmatrix.

Gemäß einem zweiten Aspekt der Erfindung, erfolgt eine Auswahl eines Funkübertragungskanals aus einer Gruppe von Funkübertragungskanälen, die jeweils unterschiedlichen Übertragungstechnologien entsprechen und/oder verschiedene Infrastruktur-Komponenten nutzen, zur Herstellung einer Datenverbindung zwischen einer mobilen Einheit und einer Zentraleinheit. Dabei ist die Zentraleinheit mit einer ersten lokalen Einheit verbindbar und insbesondere verbunden, die in einem örtlichen Bereich angeordnet ist und über die eine Datenübertragungsverbindung zu der mobilen Einheit mittels eines ersten Funkübertragungskanals herstellbar ist, der einer ersten Übertragungstechnologie der unterschiedlichen Übertragungstechnologien entspricht und/oder eine erste Infrastruktur-Komponente nutzt. Die Zentraleinheit ist weiterhin mit einer zweiten lokalen Einheit verbindbar und insbesondere verbunden, die in dem örtlichen Bereich angeordnet ist und über die eine Verbindung zu der mobilen Einheit mittels eines zweiten Funkübertragungskanals herstellbar ist, der einer zweiten

Übertragungstechnologie der unterschiedlichen Übertragungstechnologien entspricht und/oder eine zweite Infrastruktur-Komponente nutzt. Die mobile Einheit weist mindestens zwei Funkeinheiten auf, die jeweils für eine Datenübertragung über einen der beiden Funkübertragungskanäle ausgebildet sind. Die Auswahl des Funkübertragungskanals aus der Gruppe von Funkübertragungskanälen erfolgt mittels Steuerungs-Daten, die außerhalb der mobilen Einheit erzeugt und/oder gespeichert werden. Sie können zur Steuerung der Auswahl insbesondere von einer externen Datenquelle zu der mobilen Einheit übertragen werden. Zwischen der mobilen Einheit und der Zentraleinheit kann nach der Auswahl die Datenverbindung über den ausgewählten Funkübertragungskanal hergestellt werden.

Die Auswahl des Funkübertragungskanals erfolgt insbesondere in einem Kommunikationsnetzwerk, in dem die Datenverbindung hergestellt wird. Die Auswahl kann in der mobilen Einheit erfolgen und insbesondere, wenn sich die mobile Einheit in dem örtlichen Bereich befindet oder sich auf diesen Bereich zubewegt, in welchem mittels ihrer mindestens zwei Funkeinheiten sowohl eine Verbindung zur ersten lokalen Einheit als auch zur zweiten lokalen Einheit herstellbar ist. Die Auswahl kann insbesondere im Zuge des Wechsels von einem ersten örtlichen Bereich in einen zweiten örtlichen Bereich erfolgen, wobei der Funkübertragungskanal in der mobilen Einheit je nach Auswahl geändert bzw. umgeschaltet werden kann. Auf Basis der Auswahl kann ein horizontaler und/oder ein vertikaler Handover-Prozess für den Funkübertragungskanal erfolgen. Die Funkeinheiten können dazu jeweils entsprechend ausgebildet sein, beispielsweise durch eine Sende- und/oder Empfangseinheit, die einer jeweiligen Funkübertragungstechnologie entspricht und/oder durch eine elektronische und/oder programmtechnische Komponente, mit der eine Kopplung mit einer Infrastruktur-Komponente des Kommunikationsnetzwerk erfolgen kann, beispielsweise eine SIM-Mobilfunkkarte.

Die Auswahl des Funkübertragungskanals aus der Gruppe von Funkübertragungskanälen kann ganz oder teilweise automatisch erfolgen. Sie kann beispielsweise ganz oder teilweise durch ein Computerprogramm gesteuert werden, das mittels eines innerhalb der mobilen Einheit vorgesehenen Prozessors ausgeführt wird. Die Steuerung der Auswahl kann auch durch geeignete andere elektronische und insbesondere digitale Steuerungskomponenten erfolgen.

In einem vorteilhaften Ausführungsbeispiel des zweiten Aspekts der Erfindung werden die Steuerungsdaten von der Zentraleinheit und/oder mindestens einer der lokalen Einheiten erzeugt, bereitgestellt und/oder zur mobilen Einheit übertragen. Die Auswahl des Funkübertragungskanals kann insbesondere in der mobilen Einheit erfolgen. Zur Auswahl des Funkübertragungskanals können eine in der mobilen Einheit vorgesehene Steuerung, eine in der Zentraleinheit vorgesehene und/oder eine in einer der lokalen Einheiten vorgesehene Steuerung zusammen wirken. Die mobile Einheit kann insbesondere ein Fahrzeug sein.

In einem weiteren vorteilhaften Ausführungsbeispiel des zweiten Aspekts der Erfindung werden Daten zu mindestens einer früheren Funkverbindung, so genannte historische Daten, zu mindestens einem der Funkübertragungskanäle in dem örtlichen Bereich verwendet. Die historischen Daten können in der mobilen Einheit , in der lokalen Einheit, in der Zentraleinheit und/oder in einer weiteren Datenquelle erfasst, bereit gestellt und/oder gespeichert werden.

Gemäß einem vorteilhaften Ausführungsbeispiel der Erfindung ist in der mobilen Einheit ist insbesondere eine erste Steuerung zur Steuerung der Funkverbindung der ersten Funktechnologie und/oder ersten Infrastruktur-Komponente vorgesehen und eine zweite Steuerung zur Steuerung der Funkverbindung der zweiten Funktechnologie und/oder zweiten Infrastruktur-Komponente. In der mobilen Einheit und insbesondere in mindestens einer der Steuerungen der mobilen Einheit kann mindestens ein Sensor vorgesehen sein, mit dem für die Qualität der Funkübertragung maßgebliche Messwerte erfasst werden und zur Auswahl der Funkübertragungsstrecke verwendet werden.

In weiteren vorteilhaften Ausführungsbeispielen der Erfindung sind die Übertragungstechnologien der Funkübertragungskanäle jeweils aus der folgenden Gruppe standardisierter Technologien ausgewählt: GSM, GSM2, GSM3, GSM4, LTE, LTE-A, UMTS, WLAN, WiMAX, ETSI ITS G5.

Gemäß einem vorteilhaften Ausführungsbeispiel der Erfindung erfolgt eine Auswahl eines Funkübertragungskanals aus einer Gruppe von Funkübertragungskanälen, die jeweils unterschiedlichen Übertragungstechnologien entsprechen und/oder verschiedene Infrastruktur-Komponenten nutzen, zur Herstellung einer Datenverbindung zwischen einer mobilen Einheit und einer Zentraleinheit. Dabei ist die Zentraleinheit mit einer ersten lokalen Einheit verbindbar und insbesondere verbunden, die in einem örtlichen Bereich angeordnet ist und über die eine Datenübertragungsverbindung zu der mobilen Einheit mittels eines ersten Funkübertragungskanals herstellbar ist, der einer ersten Übertragungstechnologie der unterschiedlichen Übertragungstechnologien entspricht und/oder eine erste Infrastruktur-Komponente nutzt. Die Zentraleinheit ist weiterhin mit einer zweiten lokalen Einheit verbindbar und insbesondere verbunden, die in dem örtlichen Bereich angeordnet ist und über die eine Verbindung zu der mobilen Einheit mittels eines zweiten Funkübertragungskanals herstellbar ist, der einer zweiten Übertragungstechnologie der unterschiedlichen Übertragungstechnologien entspricht und/oder eine zweite Infrastruktur-Komponente nutzt. Die mobile Einheit weist mindestens zwei Funkeinheiten auf, die jeweils für eine Datenübertragung über einen der beiden Funkübertragungskanäle ausgebildet sind. Für die Auswahl des Funkübertragungskanals aus der Gruppe von Funkübertragungskanälen werden Daten zu mindestens einer früheren Funkverbindung, so genannte historische Daten, zu mindestens einem der Funkübertragungskanäle in dem örtlichen Bereich verwendet. Zwischen der mobilen Einheit und der Zentraleinheit kann dann die Datenverbindung über den ausgewählten Funkübertragungskanal hergestellt werden.

Die historischen Daten können insbesondere empirisch gewonnen und/oder mit Zeitstempeln versehene und/oder gespeicherte Daten sein. Die historischen Daten können insbesondere in der mobilen Einheit, in mindestens einer der lokalen Einheiten, in der Zentraleinheit und/oder in einer weiteren Datenquelle, beispielsweise in einem mit dem Kommunikationsnetzwerk verbindbaren Backend-Server erfasst, bereit gestellt und/oder gespeichert werden und insbesondere dort jeweils verfügbar sein. Die historischen Daten können insbesondere zwischen einer oder mehreren dieser Einheiten ausgetauscht werden. Die mobile Einheit ist beweglich und bewegt sich insbesondere in dem örtlichen Bereich.

Die Infrastruktur-Komponente kann beispielsweise eine Mobilfunk-Basisstation, eine Zentraleinheit eines Netzwerkbetreibers oder eine Steuerungskomponente des jeweiligen Kommunikationsnetzes, insbesondere des Mobilfunknetzes des Netzwerkbetreibers sein. Die Infrastruktur-Komponente kann auch eine entsprechende Komponente für einen Funkübertragungskanal einer anderen Übertragungstechnologie sein, beispielsweise ein Access Point für ein WLAN-Netzwerk.

Der dritte Aspekt der Erfindung beruht auf der Erkenntnis, dass der Auswahlprozess für einen Funkübertragungskanal in einem örtlichen Bereich wesentlich einfacher und genauer gesteuert werden kann, wenn zu mindestens einem der Funkübertragungskanäle in dem örtlichen Bereich so genannte externe Steuerungs-Daten, die außerhalb der mobilen Einheit erzeugt und/oder gespeichert werden, verfügbar sind und verwendet werden. Die Auswahlentscheidung kann dann auf Basis einer breiteren Informationsbasis erfolgen, insbesondere, wenn sowohl externe Steuerungs-Daten als auch innerhalb der mobilen Einheit erzeugte bzw. verfügbare interne Daten, beispielsweise Sensor-Daten zur Empfangsstärke des Funkverbindungskanals verwendet werden. Dies kann insbesondere bei Auswahlentscheidungen für vertikale und/oder horizontale Handover in hybriden Netzwerken zu einer Reihe von Vorteilen führen:

- Hohe Verbindungsqualität, insbesondere, wenn sowohl interne als auch externe Daten verfügbar sind und verwendet werden. Die Verbindungsqualität kann sich beispielsweise als Ausfallsicherheit der Funkverbindung, als schneller Verbindungsaufbau und/oder als kostengünstige Verbindung auswirken.

- Hohe Empfangsstärke, insbesondere, wenn externe Daten zur Empfangsstärke mehrerer Funkübertragungskanälen zur Steuerung der Kanalwahl verwendet werden.
- Keine bzw. weniger Verbindungsunterbrechungen sowie relativ wenige vertikale Handover-Ereignisse und somit eine robustere Kommunikation. Dies ist insbesondere dann von hoher Bedeutung, wenn die mobile Einheit bewegt wird, beispielsweise als Smart Phone mit einem Fahrzeug und insbesondere in Form eines Fahrzeugs, wenn beispielsweise eine Mobilfunkkarte fest in das Fahrzeug integriert ist.
- Kurze Verbindungszeit (sog. Air Time) zwischen der mobilen Einheit und der lokalen Einheit. Dadurch können eine effizientere Nutzung des Funkübertragungskanals erfolgen, unnötiger Protokoll-Overhead bei deren Kommunikation vermieden werden und Ressourcen der Funkschnittstelle optimiert werden.

Insbesondere kann vorgesehen sein, dass in mindestens einer der Einheiten, vorzugsweise in der mobilen Einheit, mindestens ein Sensor vorgesehen ist, mit dem für die Qualität der Funkübertragung maßgebliche Messwerte des jeweiligen Funkübertragungskanals erfasst werden und diese ebenfalls zur Auswahl des Funkübertragungskanals verwendet werden. Mit dem bzw. den Sensoren können beispielsweise folgende Messgrößen erfasst werden:

- Passiv messbare Netzwerk-Parameter wie Leistungskenngrößen, die Empfangsstärke, das Signalzu-Rausch-Verhältnis, die Kanallast, das Interferenzverhalten usw.
- aktiv messbare Netzwerk-Parameter wie die Latenz, die Paket-Fehlerrate oder die maximale oder durchschnittliche Datenübertragungsrate.

Der Sensor kann insbesondere in das Mobilfunk-Modem integriert sein bzw. das Mobilfunk-Modem selbst der Sensor sein.

Es können insbesondere in der mobilen Einheit weitere lokale Messgrößen, die insbesondere nicht netzwerkspezifisch bzw. nicht spezifisch für den Funkübertragungskanal sind und/oder von einer Fahrzeug-Sensorik aufgenommen werden, erfasst und für die Auswahl verwendet werden, beispielsweise mittels Positions-, Richtungs-, Geschwindigkeits- und Beschleunigungssensorik, Drehraten-Sensorik, Richtungs-Sensorik, bildgebende Sensorik, Wettersensorik, insbesondere Niederschlags-Sensorik, usw.

Gemäß einem vorteilhaften Ausführungsbeispiel der Erfindung sind die historischen Daten und/oder die externen Steuerungs-Daten geodatenreferenziert und die Auswahl des Funkübertragungskanals erfolgt anhand einer Positionsbestimmung der mobilen Einheit und der geodatenreferenzierten historischen Daten. Dabei kann weiterhin vorteilhaft eine Positionsbestimmung der mobilen Einheit mittels eines Navigationssystems erfolgen und anhand einer im Navigationssystem gespeicherten Route, entlang der sich die mobile Einheit bewegt und der geodatenreferenzierten historischen Daten eine Vorkonditionierung des jeweiligen Auswahlprozesses des Funkübertragungskanals für Streckenabschnitte entlang der Route erfolgen. Die historischen Daten können auch zeitreferenziert sein und die Auswahl kann anhand einer Zeitbestimmung und der zeitreferenzierten historischen Daten erfolgen.

Kriterien für die Auswahl des Funkübertragungskanals bzw. damit verbundenen Datenübertragungs-Netzes können sowohl lokal in der mobilen Einheit aufgrund messtechnisch ermittelter und/oder gescannter Werte bestimmt werden als auch kooperativ. Bei einer kooperativen Bestimmung können Daten über Funkübertragungskanäle auch aus anderen Datenquellen wie zum Beispiel den lokalen Einheiten oder von einem zentralen Datendienst, insbesondere von der Zentraleinheit, empfangen und verwendet werden. Historische Daten und/oder aktuelle Daten zu den jeweiligen Datenübertragungs-Netzen und/oder -Technologien können als sogenannte Verfügbarkeitskarte bereit gestellt werden, die mehrere lokale Bereiche umfasst, zeitreferenziert ist und/oder seitens der mobilen Einheit oder einer externen Datenquelle des Netzwerkproviders oder anderen Dienstleisters erstellt wird. Zudem kann insbesondere von einem Netzwerk-Betreiber eine Netzauslastungskarte bereit gestellt werden, die die aktuelle Auslastung des jeweiligen Netzes bzw. der jeweiligen Funkübertragungstechnologie darstellt. Auf Basis der Verfügbarkeitskarte und/oder der Netzauslastungskarte kann eine Erfahrungskarte erstellt werden, die zusätzliche Daten, Erfahrungswerte und/oder Bewertungen und insbesondere historische Daten umfasst. Die entsprechenden historischen Daten beruhen jeweils auf einer Vielzahl empirisch und insbesondere messtechnisch ermittelter Daten beispielsweise zur Netzverfügbarkeit, zur Verfügbarkeit der jeweiligen Übertragungstechnologie und/oder zur jeweiligen Signalstärke. Daten der Verfügbarkeitskarte, der Netzauslastungskarte und/oder der Erfahrungskarte können zur Auswahl des Funkübertragungskanals und/oder einer Netzwerk-Infrastruktur-Komponente verwendet werden. Die Positions-Sensorik kann beispielsweise eine auf dem Global Positioning System (GPS) beruhende, geodatenreferenzierende Sensorik sein.

Die mobile Einheit bzw. das mobile Endgerät kann insbesondere ein Fahrzeug sein. Fahrzeug im Sinne der vorliegenden Erfindung kann jede Art von Fahrzeug sein, beispielsweise ein Fahrrad, ein Kraftfahrzeug, ein Elektrofahrzeug, ein Zug, ein Schiff usw. Die mobile Einheit kann auch ein Mobilfunkgerät wie zum Beispiel ein Smart Phone sein oder eine andere Einheit, die mindestens ein elektronisches Kommunikationsmodul umfasst. Die genannten Messgrößen können insbesondere dann vorteilhaft verwendet werden, wenn die mobile Einheit ein Fahrzeug ist oder im Zuge einer Fortbewegung mit einem Fahrzeug benutzt wird. Dabei können lokale Fahrzeug-Parameter als Messgrößen erfasst und zur Auswahl des Funkübertragungskanals verwendet werden.

Die Funk-Basisstation kann eine stationäre Station sein und das mobile Endgerät kann fest mit einem Kraftfahrzeug verbunden sein, wobei das Kraftfahrzeug eine Karosserie aufweisen kann und die Antennen des mobilen Endgeräts außen an der Karosserie montiert sein können.

Die Verwendung von aktuellen Messgrößen der Fahrzeug-Sensorik und/oder entsprechenden aktuellen Daten aus anderen Quellen zur Auswahl des Funkübertragungskanals ermöglicht eine verbesserte Vorkonditionierung insbesondere bei vertikalen und/oder horizontalen Handover-Entscheidungen, bei Wettereinflüssen wie zum Beispiel Schneefall oder starker Regen oder bei hohen Straßenverkehrsaufkommen. Durch eine derartige Vorkonditionierung können insbesondere vertikale und/oder horizontale Handover-Entscheidung verbessert werden, die für eine sich bewegende mobile Einheit im Zuge eines Übergangs zwischen zwei Mobilfunkzellen erfolgen.

Gemäß einem weiteren vorteilhaften Ausführungsbeispiel der Erfindung wirken zur Auswahl des Funkübertragungskanals eine in der mobilen Einheit vorgesehene Steuerung, eine in der Zentraleinheit vorgesehene und/oder eine in einer der lokalen Einheiten vorgesehene Steuerung zusammen.

Die historischen Daten und/oder die externen Steuerungs-Daten können insbesondere ganz oder teilweise in einer der Steuerungen gespeichert werden. Sie können von dieser Steuerung an eine andere Steuerung im Laufe des Auswahlprozesses für den Funkübertragungskanal übertragen werden.

In der mobilen Einheit kann vorzugsweise eine erste Steuerungskomponente zur Steuerung der Funkverbindung der ersten Funktechnologie und/oder für die Nutzung der ersten Infrastruktur-Komponente vorgesehen sein und eine zweite Steuerungskomponente zur Steuerung der Funkverbindung der zweiten Funktechnologie und/oder für die Nutzung der zweiten Infrastruktur-Komponente. Die beiden Steuerungskomponenten können zur Auswahl des Funkübertragungskanals steuerungstechnisch zusammen wirken. Die historischen Daten werden insbesondere in der mobilen Einheit gespeichert. Diese gespeicherten Daten werden insbesondere zur Auswahl des Funkübertragungskanals herangezogen.

Gemäß einer weiteren bevorzugten Ausführungsform der Erfindung erfolgt die Auswahl des Funkübertragungskanals zusätzlich in Abhängigkeit mindestens einer computergesteuerten Anwendung, die auf einem Prozessor abläuft, der mit der mobilen Einheit steuerungstechnisch verbunden ist und insbesondere in die mobile Einheit integriert ist. Diese Ausführungsform ist beispielsweise dann besonders vorteilhaft anwendbar, wenn die mobile Einheit ein Fahrzeug ist. Je nach Art der mindestens einen Anwendung kann dann mindestens einer der Funkübertragungskanäle in der Auswahl bevorzugt werden. Dadurch kann eine Optimierung der jeweiligen Verbindungstechnologie und/oder Infrastruktur-Komponenten hinsichtlich der jeweiligen Anwendung erfolgen und somit die Qualität des jeweiligen von der Anwendung bereit gestellten Services optimiert werden. Beispielsweise kann vorgesehen sein, dass für eine Entertainment-Anwendung ein Funkübertragungskanal bevorzugt wird, über den eine hohe Datenrate übertragbar ist, z.B. ein WLAN-Kanal, während beispielsweise für eine sicherheitsrelevante Anwendung wie eine Notruf-Funktion ein möglichst Signalstarker Funkkanal bevorzugt wird, z.B. ein GSM-Kanal. Für den Grad der Bevorzugung kann beispielsweise ein Parameter in entsprechenden Entscheidungs-Algorithmen zur Auswahl des Funkübertragungskanals vorgesehen sein. Die jeweiligen Anwendungen können für die Auswahl auch hinsichtlich einer Priorität eingeteilt werden. Dazu können beispielsweise die Notruf-Funktion sowie Funktionen von Fahrerassistenzsystemen, mit denen verkehrsflussrelevante Daten wie Stauende-Daten oder Querverkehr-Daten übermittelt werden, mit einer hoher Priorität eingestuft sein, Internet- und Multimedia-Funktionen mit einer mittleren Priorität und Auskunftsdienste mit geringer Priorität.

Die anwendungsbezogene Optimierung bei der Auswahl des Funkübertragungskanals kann anhand von lokal erfassten und gespeicherten Daten innerhalb der mobilen Einheit erfolgen und/oder anhand von Daten, die von der Zentraleinheit bereit gestellt und/oder an die mobile Einheit übertragen werden. Die Daten können dabei historischen Daten und/oder weitere Steuerungsdaten umfassen. Als Entscheidungsparameter bzw. Optimierungsziele für die Auswahl des Funkübertragungskanals können beispielsweise herangezogen werden die maximale Datenrate, eine minimale Übertragungszeit, minimale Übertragungskosten oder eine maximale Robustheit des jeweiligen Datendienstes.

Mit der Erfindung kann vorteilhaft auch für einen örtlichen Bereich die Auslastung bzw. Skalierung der verschiedenen Funkübertragungskanäle optimiert werden, beispielsweise, wenn anhand der historischen Daten erkennbar ist, dass in dem örtlichen Bereich täglich zu einer bestimmten Uhrzeit wie zum Beispiel während der sogenannten Rush Hour im Berufsverkehr, ein bestimmter Funkübertragungskanal aufgrund der Vielzahl paralleler Teilnehmer überlastet und ein anderer Funkübertragungskanal nur wenig ausgelastet sind. In dieser Situation kann anhand der historischen Daten gezielt der wenig ausgelastete Funkübertragungskanal ausgewählt werden, d.h. in dem örtlichen Bereich kann eine Last-Balancierung zwischen den verschiedenen Funkübertragungskanälen wie z.B. einem GSM-Mobilfunkübertragungskanal und einem WLAN-Funkübertragungskanal erfolgen. Dadurch kann die spektrale Effizienz der Funkübertragungskanäle in diesem Bereich erhöht werden.

Aktuelle Daten zu Rush Hours oder zu sonstwie verursachten Verkehrsverdichtungen bzw. Staus können auch aktuell über die Zentraleinheit und/oder externe Datenquellen bereitgestellt und zur Auswahl des Funkverbindungskanals verwendet werden. Zur Bereitstellung entsprechender Daten können auch sog. Crowd-Sourcing-Methoden angewandt werden, wobei Daten von einer Vielzahl von Fahrzeugen, die sich im selben örtlichen Bereich befinden oder vor kurzem befanden, über eine zentrale Datenquelle wie z.B. einem so genannten Backend-Server oder auch direkt von Fahrzeug-zu-Fahrzeug an die jeweilige mobile Einheit übertragen werden, in der die Auswahl des Funkübertragungskanals erfolgen soll.

Steuerungs-Daten und/oder historische Daten können auch direkt von einem ersten, insbesondere aus dem örtlichen Bereich ausfahrenden Fahrzeug zu einem zweiten, insbesondere in den örtlichen Bereich einfahrenden Fahrzeug übertragen, beispielsweise drahtlos in Form einer Fahrzeug-zu-Fahrzeug (Car-to-Car) Kommunikation. Diese hochaktuellen Daten können dann von dem zweiten Fahrzeug für die Auswahl des Funkübertragungskanals verwendet werden.

Wenn über einen Funkübertragungskanal parallel eine Vielzahl von Datenübertragungen erfolgt, ist es zudem vorteilhaft, eine zentrale, die jeweiligen Daten übertragenden Anwendungen berücksichtigende Steuerung vorzusehen. Diese Steuerung kann ganz oder teilweise in der mobilen Einheit, in der lokalen Einheit und/oder in der Zentraleinheit vorgesehen sein. Dabei ist es vorteilhaft, wenn lokal mit der mobilen Einheit oder der lokalen Einheit ermittelte Messgrößen über geeignete Schnittstellen, beispielsweise über einen oder mehrere der Funkübertragungskanäle für die jeweiligen anderen Einheiten verfügbar gemacht werden.

In den Fällen, in denen die mobile Einheit ein Fahrzeug ist, ist die Erfindung auch dadurch besonders vorteilhaft anwendbar, dass sie über die Funkübertragungskanäle und die Zentraleinheit, auch mit einem Backend-Server verbindbar ist und über diesen Server wiederum mit einer Vielzahl anderer Fahrzeuge datentechnisch verbindbar ist. Sie kann damit eine Vielzahl historischer Daten erfassen und speichern, die ihr von den jeweiligen Fahrzeugen aus den jeweiligen örtlichen Bereichen, beispielsweise zu den dortigen Funkübertragungskanälen übermittelt werden. Die übermittelten Daten können dabei insbesondere georeferenziert sein oder im Zuge der Speicherung im Backend-Server georeferenziert werden.

Für die Auswahl des Funkübertragungskanals können unterschiedliche Algorithmen realisiert werden, die die historischen Daten und gegebenenfalls weiterer Daten bzw. Parameter sowie deren Klassifizierung, Gewichtung und Verknüpfung verwenden. Für entsprechende Entscheidungen innerhalb des Auswahlprozesses können beispielsweise schwellwertbasierte Regeln Anwendung finden, auf Fuzzylogik basierende Algorithmen und/oder Algorithmen, die auf der Methode des Analytischen-Hierarchie-Prozesses (AHP) beruhen.

Gemäß einem weiteren vorteilhaften Ausführungsbeispiel der Erfindung werden zu mindestens einem Datenübertragungsvorgang über einen der Funkübertragungskanäle in dem örtlichen Bereich und außerhalb der mobilen Einheit Kanalverbindungsdaten, so genannte externe Kanalverbindungsdaten, erzeugt. Die Auswahl des Funkübertragungskanals aus der Gruppe von Funkübertragungskanälen kann dann mittels der externen Kanalverbindungsdaten erfolgen. Die Auswahl des Funkübertragungskanals kann weiterhin insbesondere in der mobilen Einheit erfolgen.

Eine Übertragungstechnologie im Sinne der vorliegenden Erfindung kann insbesondere ein zellulares Netzwerk vorsehen, mindestens einen Access Points und/oder mindestens ein ad hoc Funknetzwerk. Die Übertragungstechnologie kann einem entsprechenden Technologiestandard zur Datenübertragung entsprechen, beispielsweise einem der Standards

- Global System for Mobile Communications (GSM), GSM2, GSM3 (Universal Mobile Telecommunications System, UMTS), GSM4 (Long Term Evolution, LTE, LTE-A),
- Wireless Local Area Network (WLAN) gemäß der Gruppe der Standards IEEE 802.11x,
- dem Standard European Telecommunications Standards Institute Intelligent Transport System ETSI ITS G5, oder
- dem Standard Worldwide Interoperability for Microwave Access (WiMAX), und ggf. davon wiederum einer bestimmten Version sowie davon abgeleiteter Standards, oder
- einem anderen Datenübertragungsstandard.

Die entsprechende Funk-Basisstation kann z.B. eine Mobilfunk-Basisstation oder ein WLAN-Netzwerkrouter oder WLAN Access Point sein. Die Kommunikationssystem-Technologien der Antennen können jeweils dem entsprechend ausgebildet sein.

Eine Antenne kann exklusiv für eine Datenübertragung auf Basis einer bestimmten Kommunikationssystem-Technologie benutzt werden oder nicht-exklusiv, wobei die Antenne dann für eine Datenübertragung auf Basis einer weiteren Kommunikationssystem-Technologie mitbenutzt wird. Beispielsweise kann eine Antenne eines Antennenarrays bzw. einer Antennenanordnung aus mindestens zwei Antennen sowohl im Verbund für eine Datenübertragung auf Basis einer Mehrantennen-Kommunikationssystem-Technologie wie z.B. der LTE-Technologie, als auch einzeln für eine Übertragung auf Basis einer Einantennen-Technologie wie z.B. der GSM-Technologie benutzt werden.

Mit der Erfindung kann vorteilhaft eine steuerungstechnische Koordination zwischen Steuergeräten verschiedener Funkübertragungskanäle bzw. Kommunikationstechnologien und/oder Infrastruktur-Komponenten erfolgen. Durch ein erfindungsgemäßes Auswahlverfahren für einen Funkübertragungskanal können insbesondere seitens der mobilen Einheit ein aktives Ressourcen-Management und ein aktives Verbindungsmanagement für die jeweiligen Funkübertragungskanäle erfolgen. Diese können insbesondere anwendungsbezogen sein. Sie können zentral gesteuert werden. Mittels einer spezifischen Kostenfunktion lassen sich zudem vorteilhaft ein optimierter Umgang mit den verfügbaren Freiheitsgraden in einem hybriden Netzwerk und damit eine Verbesserung der Funktionsqualität bei dessen Nutzung erreichen. Durch die gezielte Auswahl des Funkübertragungskanals kann auch die Energieeffizienz der mobilen Einheit verbessert werden, indem zum Beispiel für den Funkübertragungskanal eine reduzierte Sende-Leistung eingestellt werden kann oder ein Funkübertragungskanal mit weniger komplexem Signalverarbeitungsaufwand ausgewählt wird.

Mit der Erfindung kann insbesondere auch erreicht werden, dass Verbindungsgebühren für die Datenverbindung zwischen der mobilen Einheit und der Zentraleinheit eingespart werden, wenn die externen Daten einen Gebühren-Parameter enthalten, der den jeweils in dem örtlichen Bereich und/oder der Uhrzeit zugeordneten Gebührentarifen der jeweiligen Funkübertragungskanäle entspricht. Die Auswahl des Funkübertragungskanals kann dann auch unter Berücksichtigung des Gebühren-Parameters erfolgen.

Erfindungsgemäß kann auch ein Datenübertragungssystem bereitgestellt werden, das zum Ausführen eines erfindungsgemäßen Verfahrens eingerichtet ist. Das Datenübertragungssystem kann insbesondere eine Funk-Basisstation und/oder ein mobiles Endgerät umfassen. Das mobile Endgerät kann mindestens zwei Antennen, einen Dekoder und eine Steuerung umfassen.

Im Folgenden werden weitere Ausführungsbeispiele der Erfindung anhand von Figuren näher erläutert. Es zeigen:

Figur 1     ein idealisiertes Funkübertragungssystem,

Figur 2     ein reales Funkübertragungssystem,

Figur 3     ein mobiles Endgerät,

Figur 4     Kanalkapazitäten eines Funkübertragungssystems,

Figur 5     schematisch die Durchfahrt eines Kraftfahrzeugs durch zwei örtliche Bereiche,

Figur 6     eine Datenübertragung für historische Daten,

Figur 7     ein Ablaufdiagramm für eine Übertragungskanal-Entscheidung und

Figur 8     ein Strukturdiagramm für die Auswahl eines Funkübertragungskanals.

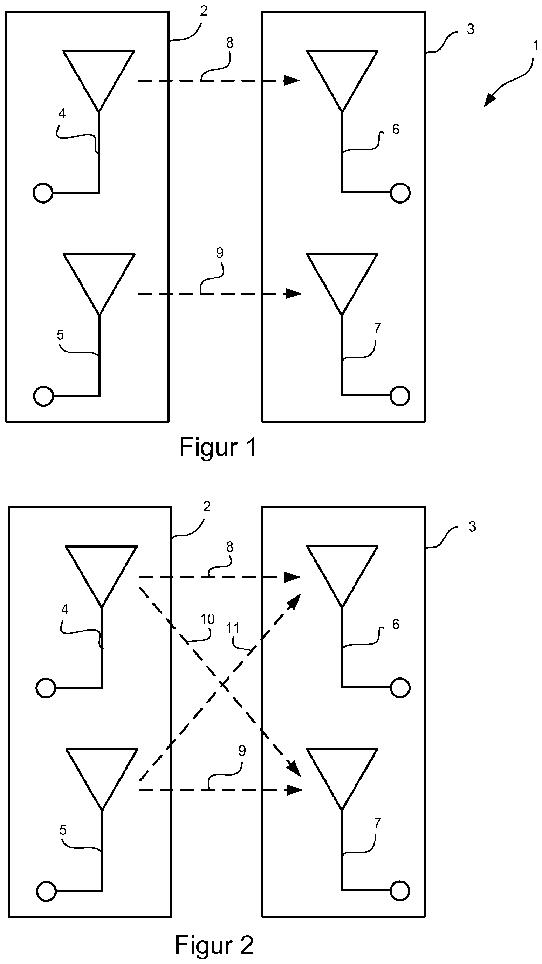

In dem in Figur 1 dargestellten Mehrantennen-Mobilfunkübertragungssystem 1 erfolgt eine Kommunikation zwischen einer Mobilfunk-Basisstation 2 und einer Mobilfunk-Übertragungseinheit 3 eines mobilen Endgeräts, die fest mit einem Kraftfahrzeug verbunden ist und zumindest teilweise in eine außen am Dach eines Kraftfahrzeugs angebrachte Antennenanordnung, beispielsweise in eine sogenannten Dachfinne integriert ist. Das mobile Endgerät kann ein Mobilfunktelefon, ein Smart-Phone oder ein anderes mobiles Kommunikationsgerät sein, das Mobilfunkkomponenten und/oder weitere Netzwerkkomponenten umfasst und insbesondere Komponenten zum Aufbau einer Internetverbindung aufweist. Die Mobilfunk-Basisstation 2 weist zwei Antennen 4, 5 auf und die Mobilfunk-Übertragungseinheit 3 zwei Antennen 6, 7. An die Antennen 4, 5, 6 und 7 sind jeweils übliche elektronische Sende- und Empfangskomponenten für die Mobilfunkübertragung angeschlossen. In Figur 1 ist eine idealisierte Situation dargestellt, bei der zur Kommunikation zwischen Mobilfunk-Basisstation 2 und Mobilfunk-Übertragungseinheit 3 Daten jeweils genau über zwei Antennen und deshalb über genau zwei Übertragungspfade 8, 9 übertragen werden. Der erste Übertragungspfad 8 wird dabei zwischen Antennen 4 und 6 gebildet und der zweite Übertragungspfad 9 zwischen Antennen 5 und 7. Dem entsprechend erfolgt eine Datenübertragung von der Mobilfunk-Basisstation 2 zur Mobilfunk-Übertragungseinheit 3 einerseits von Antenne 4 über den ersten Übertragungspfad 8 in Pfeilrichtung zur Antenne 6 und andererseits über den zweiten Übertragungspfad 9 von Antenne 5 in Pfeilrichtung zur Antenne 7. In dem hier gezeigten Optimalfall stören sich die beiden Übertragungspfade 8, 9 nicht und die jeweiligen Funksignale überlagern bzw. wechselwirken nicht. Dadurch sind die beiden Übertragungspfade 8, 9 physikalisch völlig voneinander unabhängig. Dem entsprechend wird zum Beispiel die Leistung der sendenden Antenne 4 nur von der empfangenden Antenne 6 empfangen und die abgegebene Leistung der sendenden Antenne 5 nur von der empfangenden Antenne 7. Mit einem derartigen Mehrantennen-Funksystem, das auch mehr als 2x2 Antennen aufweisen kann, insbesondere n x m Antennen (n, m >= 2), ist somit die Übertragung von Daten über multiple physikalische Übertragungspfade möglich.

Die in Figur 1 dargestellte Idealkonstellation der Übertragungspfade ist in einem realen Betrieb des Antennensystems unter physikalischen Einflüssen wie Reflexion, Beugung und Brechung zwischen Sender und Empfänger nicht vollständig erreichbar. Dabei können insbesondere Effekte einer in Figur 2 schematisch dargestellten Kreuz-Verkopplung auftreten, die zu einer niedrigeren Performance des Übertragungssystems führen. Durch die Kreuz-Verkopplung werden beispielsweise Funksignale der Antenne 4 von Antenne 7 über einen Übertragungspfad 10 empfangen, was wiederum schematisch durch einen Pfeil dargestellt ist. Funksignale der Antenne 5 werden von Antenne 6 über einen Übertragungspfad 11 empfangen, was ebenfalls durch einen Pfeil dargestellt ist. Demnach erfolgt zusätzlich zu den direkten Empfängen der Antennen 6 bzw. 7 über die Übertragungspfade 8, 9 von Antennen 4 bzw. 5 ein kreuzweiser Empfang von den jeweils anderen Sendeantennen 5 bzw. 4 über die Übertragungspfade 11,10.

Geht man davon aus, dass sowohl im optimalen als auch im realen Übertragungs-Szenario in Summe über alle Übertragungspfade die gleiche Leistung übertragen wird, die Dämpfungseigenschaften in Summe also unverändert sind, dann wird deutlich, dass eine Auswertung von rein leistungsbasierten Parametern wie zum Beispiel dem RSSI (Receive Strength Indicator) Parameter, bei dem die Summe der Empfangsleistungen an allen Empfangsantennen gemessen wird, zur Kanal- und Systembewertung für Handover-Entscheidungen nur sehr bedingt geeignet ist. Dabei ist zwar eine Aussage bezüglich der Verlusteigenschaften des jeweiligen Übertragungskanals möglich, jedoch werden die räumlichen Eigenschaften des Kanals, die insbesondere durch Beugungs-, Streuungs- und Reflexions-Einflüsse in den zugehörigen Übertragungspfaden geprägt sind, nicht berücksichtigt. Diese räumlichen Eigenschaften können jedoch bei der Verwendung von Mehrantennensystemen gezielt ausgenutzt und bei den Handover-Entscheidungen berücksichtigt werden und haben dann einen hohen Einfluss auf die Systemperformance.

Bei dem in Figur 2 gezeigten Übertragungssystem kann eine Handover-Entscheidung dahin gehend getroffen werden, zwischen welchen Antennen seitens der Mobilfunk-Basisstation 2 der Mobilfunk-Übertragungseinheit 3 die Übertragung von Nutzdaten stattfindet, beispielsweise von Telefongesprächsdaten, SMS/MMS-Daten oder Internetdaten. Als Übertragungspfade stehen dabei zur Verfügung:

> Übertragungspfad P1: Übertragung zwischen Antenne 4 und Antenne 6
> Übertragungspfad P2: Übertragung zwischen Antenne 4 und Antenne 7
> Übertragungspfad P3: Übertragung zwischen Antenne 5 und Antenne 6
> Übertragungspfad P4: Übertragung zwischen Antenne 5 und Antenne 7.

Für die Entscheidung, welcher Übertragungskanal aus diesen Übertragungspfaden zur Übertragung von Nutzdaten verwendet wird (Handover-Entscheidung), wird kanalweise ein Gütewert bestimmt. Zur Bestimmung des jeweiligen Gütewerts kann die Übertragungsrate des jeweiligen Kanals verwendet werden, beispielsweise für einen Übertragungskanal auf Basis der Übertragungspfade P1 und P3 die an der Antenne 6 ankommende und ggf. mittels eines an diese angeschlossenen Dekoders ermittelte Übertragungsrate der Nutzdaten.

Folgende weitere Kenngrößen können zur Bestimmung des Gütewerts verwendet werden: Datenübertragungsrate, Funk-Empfangsleistung, Energieverbrauch seitens des Empfängers, Zeitverzögerungen bei der Datenübertragung, Signal-zu-Rausch-Verhältnis, Signalabbruchszeiten, lokale Präferenzeinstellungen usw.

Um den Auswerteaufwand für Kanalkoeffizienten der Kanäle gering zu halten, kann die Konditionszahl der jeweiligen Kanal-Übertragungsmatrix als primärer Indikator (Key Performance Indicator, KIP) zur Bestimmung des jeweiligen Gütewerts verwendet werden. Damit ist eine schnelle Bewertung der Leistungsfähigkeit der jeweiligen Übertragungsstrecke, d.h. die kanalweise Bestimmung des jeweiligen Gütewerts möglich, um anhand des Vergleichs der jeweiligen Kanal-Gütewerte die Handover-Entscheidungen bei derartigen Mehrantennensystemen zu verbessern bzw. optimal treffen zu können.

Die Übertragungskanal-Entscheidungen können nicht nur, wie in Figur 2 dargestellt, für die räumlichen bzw. antennenweisen Übertragungspfade erfolgen, sondern auch für jeweilige Kommunikationssystem-Technologien wie z.B. GSM, UMTS oder LTE, die seitens der Mobilfunk-Basisstation 2 und der Mobilfunk-Übertragungseinheit 3 unterstützt bzw. bereitgestellt werden. Auch hier wird für die verschiedenen Übertragungskanäle jeweils ein Gütewert bestimmt und anhand des Vergleichs der jeweiligen Kanal-Gütewerte entschieden, welcher Übertragungskanal, das heißt welche Verbindungstechnologie für die Übertragung der Nutzdaten verwendet wird.

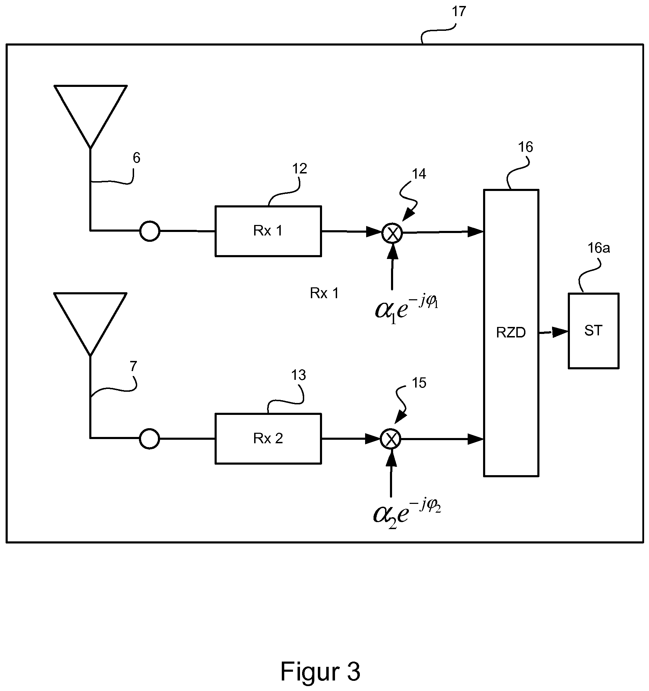

In Figur 3 zeigt ein fest mit einem Kraftfahrzeug verbundenes mobiles Endgerät 17 mit den empfangsseitigen Komponenten einschließlich der Antennen 6, 7. Weiterhin sind Übertragungseinflüsse auf das empfangene Mobilfunksignal schematisch dargestellt. Die über Antenne 6 eintreffenden Mobilfunksignale werden durch den Empfänger 12 (Receiver Rx 1) empfangen und verarbeitet. Weiterhin erfolgt eine Amplituden- und Phasenanpassung (14) der Empfangssignale entsprechend der Gleichung (1):

$$\alpha_1 e^{-j\varphi_1} \qquad \text{(Gleichung 1)}$$

wobei

$\alpha_1$ ein Amplituden-Anpassungswert aufgrund der Mehrantennen-Eingangssignale ist,

j die imaginäre Zahl ist und

$\varphi_1$ ein Phasen-Anpassungswert aufgrund der Mehrantennen-Eingangssignale ist.

Für die über Antenne 7 empfangenen Mobilfunksignale gilt das Entsprechende, wobei hier ein Empfänger 13 (Receiver Rx 2) und eine Amplituden- und Phasenanpassung (15) vorgesehen sind.

Die Mobilfunksignale werden dann in einem gemeinsamen, komplexen Empfänger zur Dekodierung von Signalen des Mehrantennen-Mobilfunkübertragungssystems 1, einem so genannten Raumzeitdekoder 16, übertragungskanalweise dekodiert und dabei die Nutzdaten gewonnen. Diese Daten können dann an die Steuerung 16a übertragen werden, in der anhand des Dekodierungsprozesses bzw. der Nutzdaten die Übertragungskanal-Parameter gebildet werden können, der Gütewert für den jeweiligen Übertragungskanal gebildet werden kann und die Entscheidung für den Übertragungskanal getroffen werden kann. Beispielsweise kann für eine Übertragung nach dem LTE-Standard eine Integration von Kanalparametern wie z.B. der Datenübertragungsrate und/oder über Werten zu Präambeldaten eines LTE-Übertragungsprotokolls über eine Messzeit von 100 ms und eine Empfangsbandbreite von 10 MHz erfolgen um den Gütewert zu bestimmen.

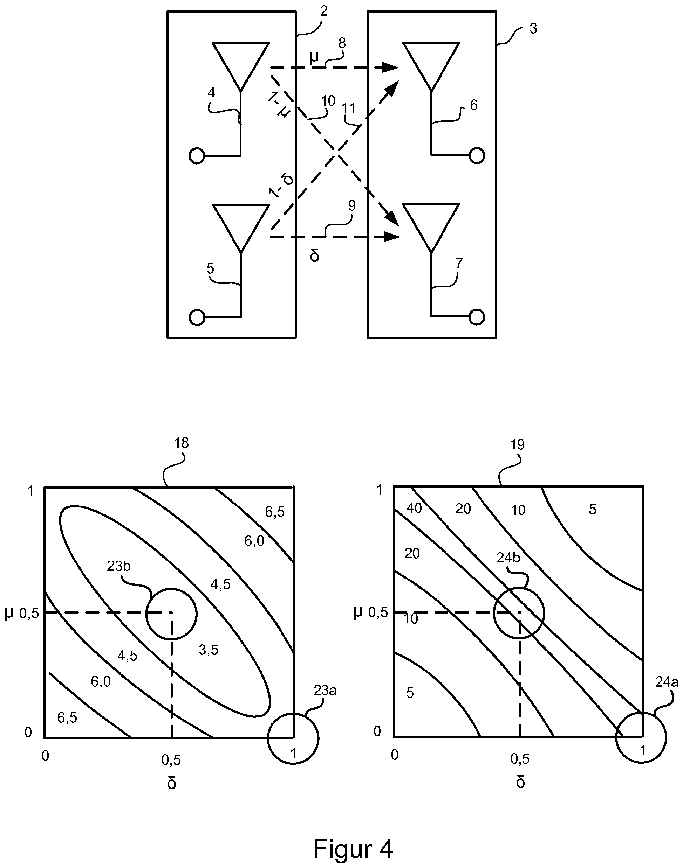

In Figur 4 ist die bereits in Figur 2 gezeigte Antennenkonfiguration nochmals dargestellt, wobei zu den Übertragungskanälen jeweils normiert und idealisiert unter der Annahme, dass keine Verlustleistung auftritt, die Empfangsleistung angegeben ist, es aber zu Übertragungs-Unsymmetrien kommen kann. Auf Übertragungspfad 8 empfängt Antenne 6 dabei eine Leistung μ, auf Übertragungspfad 9 empfängt Antenne 7 eine Leistung δ, auf Übertragungspfad 10 empfängt Antenne 7 eine Leistung 1-μ und auf Übertragungspfad 11 empfängt Antenne 6 eine Leistung 1-δ.

Betrachtet man zwei Referenzanordnungen A und B mit Übertragungsmatrizen

$$[H_A] = \begin{bmatrix} 0 & 1 \\ 0 & 1 \end{bmatrix} \quad \text{und} \quad [H_B] = \begin{bmatrix} 0,5 & 0,5 \\ 0,5 & 0,5 \end{bmatrix}$$

dann ergeben sich bei einer Singulärwerte-Zerlegung jeweils die Eigenwerte

$$\overrightarrow{\sigma_A} = \begin{pmatrix} 1,41 \\ 0 \end{pmatrix} \quad \text{und} \quad \overrightarrow{\sigma_B} = \begin{pmatrix} 1 \\ 0 \end{pmatrix}$$

Obwohl für beide Referenzanordnungen dieselbe Konditionszahl erreicht wird, führt die Vermessung der Kanalmatrix $[H_B]$ auf eine niedrigere spektrale Effizienz als die Kanalmatrix $[H_A]$. Dies ist in den beiden Grafiken 18, 19 der Figur 4 in Abhängigkeit von der jeweiligen Übertragungs-Unsymmetrie (δ, μ) dargestellt, wobei Grafik 19 die Konditionszahl κ $[H]$ / dB veranschaulicht und Grafik 18 die spektrale Effizienz C / $\frac{MBit}{s\,Hz}$. Kreis 24a in Grafik 19 gibt die Situation der Referenzanordnung A an und Kreis 24b gibt die Situation der Referenzanordnung B an. Für beide Situationen ergibt sich eine in etwa gleiche Konditionszahl von ungefähr 40 dB. Die spektralen Effizienzen hingegen unterscheiden sich wesentlich. Für Referenzsituation A liegt sie im Bereich von ungefähr 4,5 MBit/sHz (Kreis 23a), während sie für Referenzsituation B nur im Bereich von 3,5 MBit/sHz liegt (Kreis 23b).

Durch die Analyse aller vier Parameter der 2 x 2 Übertragungsmatrizen $[H_A]$, $[H_B]$ zur Bestimmung eines Gütewerts für die jeweiligen Übertragungskanäle können die Übertragungseigenschaften sehr gut bewertet werden um eine hohe Übertragung-Datenrate zu erzielen. Würde dem gegenüber empfängerseitig nur eine leistungsbezogene Analyse durchgeführt werden, dann würden beide Referenzsituationen A, B als gleichermaßen geeignet beurteilt werden, obwohl Referenzsituation A viel besser geeignet ist um eine hohe Datenrate zu erzielen.

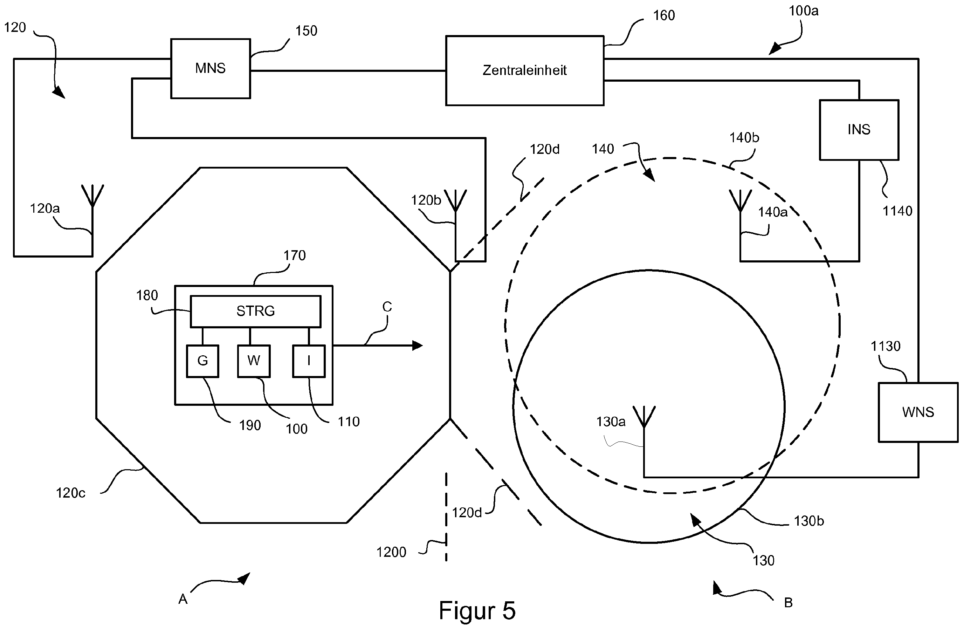

In Figur 5 ist eine hybride Netzwerk-Infrastruktur 100a gezeigt, die in diesem Beispiel ein GSM 3G-Mobilfunknetz 120, ein WLAN-Netzwerk 130 und ein ETSI ITS G5-Mobilfunknetz 140 umfasst. Die Netzwerk-Infrastruktur 100a kann auch andere Übertragungstechnologien umfassen. Es kann auch eine entsprechende zweite Netzwerk-Infrastruktur vorgesehen sein, die ganz oder teilweise unabhängig von der ersten Netzwerk-Infrastruktur ist und beispielsweise von einem anderen Netzwerkbetreiber betrieben wird. Die beiden Netzwerk-Infrastrukturen können ggf. ganz oder teilweise dieselben Komponenten verwenden und/oder gleiche Übertragungstechnologien aufweisen, beispielsweise gemeinsam eine Basisstation verwenden, aber steuerungstechnisch unterschiedlich eingerichtet sein. Das GSM 3G-Mobilfunknetz 120 erstreckt sich flächendeckend über zwei örtliche Bereiche A, B, wobei in der Figur 1 symbolisch zwei aneinander grenzenden Mobilfunkzellen 120c, 120d angedeutet sind und die angedeutete Trennlinie 1200 die örtlichen Bereiche A, B trennt. Örtliche Bereiche können auch als Gebiete oder als Zonen bezeichnet werden bzw. solche repräsentieren bzw. Teile solcher sein. Sie können innerhalb einer Landkarte prinzipiell beliebig eingeteilt bzw. zueinander abgegrenzt sein. Örtliche Bereiche können, müssen aber nicht nahtlos aneinander grenzen. Sie können zum Beispiel überlappen. Grenzen örtlicher Bereiche können beispielweise durch Grenzen von Funknetzzellen eines Mobilfunknetzes festgelegt sein.

Zu dem GSM 3G-Mobilfunknetz 120 der Netzwerk-Infrastruktur 100a sind im örtlichen Bereich A zwei lokale Einheiten in Form von Mobilfunk-Basisstationen 120a und 120b eingezeichnet, die jeweils mindestens eine Mobilfunkantenne aufweisen, sowie eine vom Netzwerkbetreiber des Mobilfunknetzes betriebenen Mobilfunk-Netzwerksteuerung 150, über die unter anderem die entsprechenden Mobilfunkdaten kommuniziert werden. Die Mobilfunk-Netzwerksteuerung 150 ist wiederum mit einer Zentraleinheit 160 verbunden, die auch Daten mit den beiden anderen Netzwerken 130 (WLAN), 140 (ETSI ITS 5) austauschen kann. Diese Verbindung kann zumindest teilweise kabelgebunden sein. In dem WLAN-Netzwerk 130 sind weiterhin eine im örtlichen Bereich B vorgesehene lokale Einheit in Form einer WLAN-Basisstation 130a, die eine WLAN-Antenne umfasst, und eine WLAN-Netzwerksteuerung 1130 vorgesehen. In dem ETSI ITS G5-Mobilfunknetz 140 sind entsprechend eine lokale Einheit in Form einer ETSI ITS 5-Basistation 140a, die mindestens eine ETSI ITS 5-Antenne umfasst und eine ETSI ITS 5-Netzwerksteuerung 1140 vorgesehen. Das WLAN-Netzwerk 130 umfasst im örtlichen Bereich B eine WLAN-Funkzelle 130b, innerhalb der eine drahtlose Kommunikation mit einer mobilen Einheit auf Basis der WLAN-Übertragungstechnologie möglich ist. Das ETSI ITS G5-Mobilfunknetz 140 umfasst im örtlichen Bereich B eine ITS-Funkzelle 140b, innerhalb der eine drahtlose Kommunikation mit einer mobilen Einheit auf Basis der ETSI ITS G5-Übertragungstechnologie möglich ist.

In Figur 5 ist weiterhin schematisch ein Kraftfahrzeug 170 eingezeichnet, wobei insbesondere dessen Abmessungen im Vergleich zur Größe der Mobilfunkzelle 120c nicht maßstabstreu sind. Im vorliegenden Beispiel umfasst das Fahrzeug 170 mehrere Komponenten für funkbasierte Datenübertragungen. Eine Kommunikationssteuerung 180 ermöglicht dabei für eine drahtlose Kommunikation eine Auswahl der Funkübertragungstechnologie auf Basis der drei oben genannten Funkübertragungstechnologien. Die Datenübertragung erfolgt dann über ein GSM-Kommunikationsmodul 190, das die GSM3-Übertragungstechnologie unterstützt, über ein WLAN-Kommunikationsmodul 100, das die WLAN-Übertragungstechnologie unterstützt oder über ein Kommunikationsmodul 110, das die ETSI ITS G5-Übertragungstechnologie unterstützt. In der Kommunikationssteuerung 180 wird dazu jeweils ausgewählt, über welches der Module 100, 110, 190, d.h. über welchen Funkübertragungskanal eine Datenverbindung zwischen dem Fahrzeug 170 und der Zentraleinheit 160 hergestellt wird. Die Auswahl (vertikales Handover) erfolgt insbesondere dann erneut, wenn das Kraftfahrzeug 170 durch seine Bewegung in Richtung C von dem vorgegebenen örtlichen Bereich A den vorgegebenen örtlichen Bereich B erreicht hat.

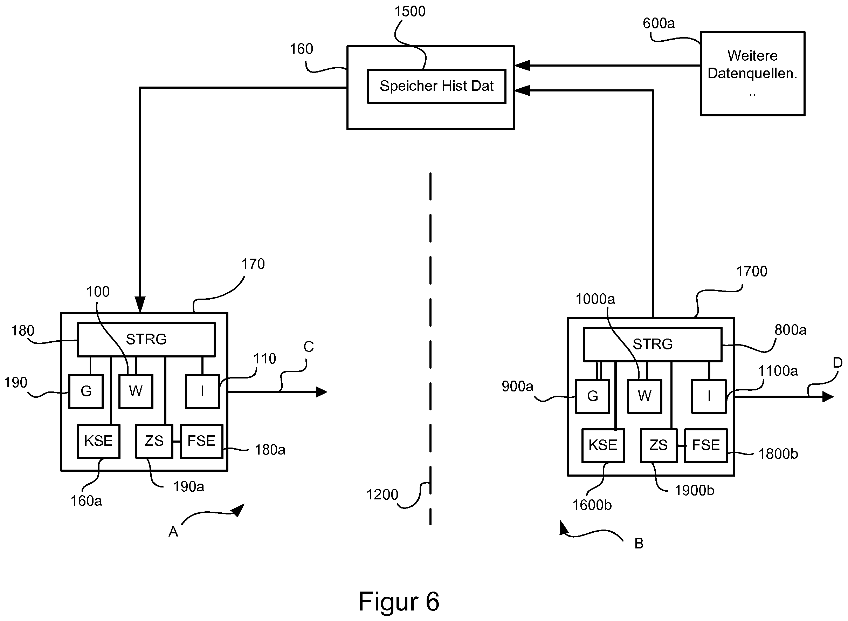

In Figur 6 ist das Kraftfahrzeug 170 im örtlichen Bereich A nochmals gezeigt, wobei hier ergänzend zu den Funkübertragungsmodulen 100, 110, 180 und 190 noch Sensoren 160a gezeigt sind, mit denen Funkübertragungsparameter der jeweiligen Funkübertragungskanäle erfassbar sind wie z.B. die jeweilige Signalstärke. Die gemessenen Werte der Funkübertragungsparameter können dann für die Auswahl bzw. das vertikale Handover verwendet werden. Weiterhin sind in dem Kraftfahrzeug 170 eine zentrale Fahrzeugsteuerung 190a vorgesehen, die zum Austausch von Daten mit der Kommunikationssteuerung 180 für die Steuerung der Funkübertragung verbunden ist. Die zentrale Fahrzeugsteuerung 190a erhält Messdaten von fahrzeuginternen Sensoren 180a wie zum Beispiel Geschwindigkeitssensoren, Positionssensoren, Beschleunigungssensoren usw. Diese lokal in der mobilen Einheit bzw. im Kraftfahrzeug 170 erfassten Daten können in der Kommunikationssteuerung 180 für die Auswahl des Funkübertragungskanals verwendet werden. In der Kommunikationssteuerung 180 können weiterhin historische, georeferenzierte Daten gespeichert sein, die mit den im Kraftfahrzeug 170 befindlichen Sensoren bei früheren Fahrten durch den örtlichen Bereich A erfasst wurden. Auch diese Daten können für die Auswahl des Funkübertragungskanals im örtlichen Bereich A verwendet werden. Weiterhin kann die Steuerung 180 von einem Datenspeicher 1500 der Zentraleinheit 160 über eine aktuell bestehende Funkverbindung historische Daten abrufen, anhand derer die Auswahl des Funkübertragungskanals gesteuert wird. Diese historischen Daten können ebenfalls zu dem örtlichen Bereich A anhand von Positionskoordinaten georeferenziert sein. Die Zentraleinheit 160 kann zudem Daten von weiteren Quellen 600a abrufen und für die Kommunikationssteuerung 180 bereit stellen bzw. sie an diese Steuerung senden, die sie dann zur Auswahl des Funkübertragungskanals verwenden kann. Beispielsweise kann eine weitere Datenquelle 600a von einem Netzbetreiber eines Mobilfunknetzes bereitgestellt werden, über die der Netzbetreiber aktuell über Störungen informiert. Derartige aktuelle oder historische Daten der Netzbetreiber können zeitbezogen und/oder georeferenziert sein.

In Figur 6 befindet sich im lokalen örtlichen Bereich B ein Fahrzeug 1700, das die oben zu Fahrzeug 170 beschriebenen Komponenten ebenfalls aufweist. Das Fahrzeug 1700 ist jedoch in seiner Fahrtrichtung D gerade dabei, den örtlichen Bereich B zu verlassen. Die Kommunikationssteuerung 800a der mobilen Einheit bzw. des Fahrzeugs 1700 übermittelt dabei im Fahrzeug 1700 bei dessen Aufenthalt im örtlichen Bereich B erfasste Daten zu Funkübertragungskanälen an die Zentraleinheit 160, die diese als historische Daten abspeichert, wobei ein Zeitstempel für den Eingang der Daten vergeben werden kann um deren Aktualität bei einer späteren Weiterleitung an andere Fahrzeuge zu berücksichtigen. Die erfassten Daten können Messwerte der Funk-Sensoren 1600b und/oder der Fahrzeugsensoren 1800b sein, es können aber auch Störungs- bzw. Fehlermeldungen der jeweiligen Funkübertragungsmodule 900a, 1000a, 1100a und/oder der Kommunikationssteuerung 800a sein oder sonstige in der Kommunikationssteuerung 800a gespeicherte, bereits früher erfasste historische Daten bzw. Erfahrungskarten. Das Fahrzeug 1700 weist eine Zentralsteuerung 1900b auf, die funktionell der Steuerung 190a des Fahrzeugs 170 entspricht und die entsprechende Daten verarbeitet.

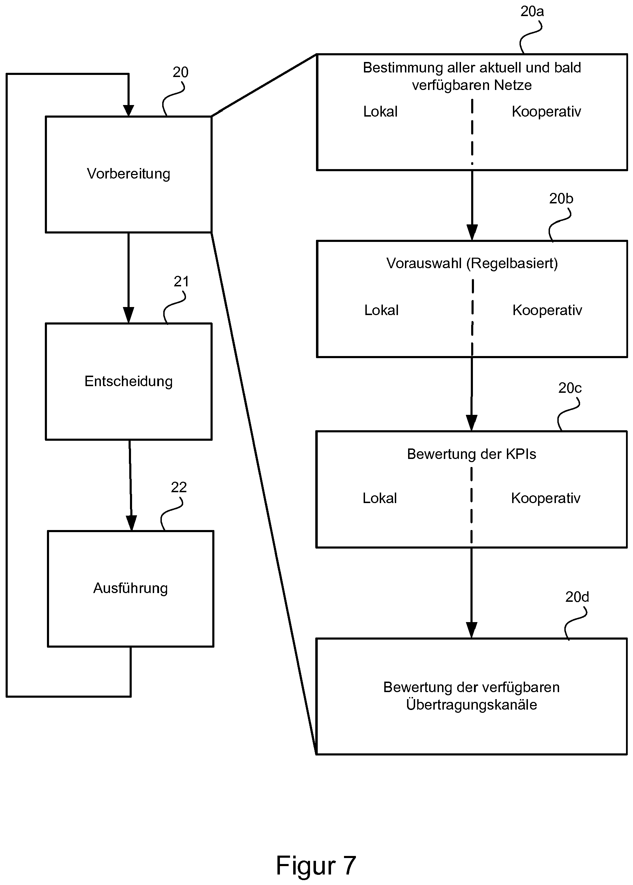

In Figur 7 ist ein Ablaufdiagramm zur Auswahl eines Funkübertragungskanals, auch Übertragungskanalwahl genannt, dargestellt. In einer ersten Phase 20 erfolgt dabei eine Vorbereitung der Entscheidung, in einer zweiten Phase 21 wird die Entscheidung anhand von Informationen aus Schritt 20 und mittels vorgegebener Regeln getroffen, welcher Übertragungskanal ausgewählt wird und in einer dritten Phase 22 wird der Empfänger entsprechend eingestellt um die Datenübertragung über den ausgewählten Übertragungskanal zu bewirken. Die Phasen 20, 21, 22 zur Übertragungskanalwahl werden dabei in regelmäßigen Zeitabständen neu durchlaufen um eine möglichst ununterbrochene Datenübertragung mit einer möglichst hohen Datenübertragungsrate zu ermöglichen, auch wenn sich das mobile Endgerät bewegt. Das Durchlaufen der Phasen kann auch mittels Positionsinformationen erfolgen, wobei bei Erreichen vorgegebener örtlicher Bereiche ein neuer Durchlauf erfolgt. Dabei kann weiterhin anhand einer Straßenkarte und aktueller Sensordaten eines Fahrzeugs wie dessen Geschwindigkeit, Lenkeinschlagwinkel etc. prognostiziert werden, wann sich das mobile Endgerät bzw. Fahrzeug innerhalb eines vorgegebenen Bereichs befindet. Dabei können insbesondere auch Daten einer in einem Navigationssystem einprogrammierten Fahrtroute herangezogen werden, auf der sich das Fahrzeug befindet. Anhand dieser Informationen und weiterer zuvor oder im Anschluss beschriebenen Informationen, beispielsweis zu verfügbaren Funkübertragungskanälen, können dann bereits proaktiv zumindest Entscheidungskriterien und insbesondere bereits Vorentscheidungen oder die feste Entscheidung für die Auswahl eines Funkübertragungskanals in einem örtlichen Bereich bereit gestellt bzw. getroffen werden, den die mobile Einheit bzw. das Fahrzeug erst zu einem späteren Zeitpunkt erreicht. Dadurch kann bei Ankunft in dem Bereich ein etwaiger Handover-Prozess rasch, effizient und störungsfrei, insbesondere unterbrechungsfrei, durchgeführt werden.

Die Phase 20 ist in vier Schritte gegliedert. Im Schritt 20a können Kriterien jeweils sowohl empfängerseitig lokal aufgrund unmittelbar messtechnisch ermittelter bzw. gescannter Werte bestimmt werden als auch kooperativ. Bei einer kooperativen Bestimmung können Daten über aktuell und/oder bald verfügbare Netze auch aus anderen Datenquellen wie von einem zentralen Datendienst bereit gestellten Verfügbarkeitskarte oder einer empfängerseitig im Laufe der Zeit erstellten Erfahrungskarte bestimmt werden, die jeweils auf einer Vielzahl empirisch ermittelter Daten beruhen. Im Schritt 20b erfolgt eine regelbasierte Vorauswahl von Übertragungskanälen, wobei diese ebenfalls lokal, kooperativ oder kombiniert lokal und kooperativ erfolgen kann. Lokal kann beispielsweise anhand einer unteren Geschwindigkeitsgrenze der Datenübertragung oder anhand einer unteren Funkleistungsgrenze ein Übertragungskanal ausgeschlossen werden. Kooperativ kann beispielsweise ein zentraler Datendienst von der Nutzung eines Netzdienstes abraten und deshalb ein diesen Netzdienst nutzender Übertragungskanal ausgeschlossen werden. Beispielsweise kann vom Netzbetreiber eine Information bereit gestellt werden, dass in dem relevanten örtlichen Bereich ein bestimmtes Netz bzw. ein bestimmter Funkübertragungskanal ausgelastet ist. Aufgrund dieser Information kann der betreffende Funkübertragungskanal von der Auswahl ausgeschlossen werden.

Im Schritt 20c werden die vorgegebenen, entscheidungserhebliche Leistungsindikatoren (KPI) bewertet und daraus für jeden Übertragungskanal ein Gütewert abgeleitet. Dabei können kanalweise lokal verschiedene Leistungswerte wie zum Beispiel die Datenübertragungsrate, die Funkstärke, die spektrale Effizienz, der Energieverbrauch seitens des Empfängers, Datenübertragungs-Zeitverzögerungen, ein Signal-zu-Rausch-Verhältnis, Signalabbrüche, lokale Präferenzeinstellungen usw. anhand von Bewertungsregeln bewertet werden. Dazu können beispielsweise auch Präambeldaten von Übertragungsprotokolldaten verwendet werden und/oder gemessene Werte zeitlich integriert werden. Die Leistungsindikatoren können auch weitere Informationen wie Tarifinformationen oder Präferenz-Informationen zu den jeweiligen Funkübertragungskanälen umfassen. Auch im Schritt 20c kann eine lokale Bewertung und/oder eine kooperative Bewertung erfolgen. Im Schritt 20d erfolgt eine Bewertung der verfügbaren Funkübertragungskanäle, wobei auch eine Reihenfolge nach einer vorgegebenen Regel gebildet werden kann.

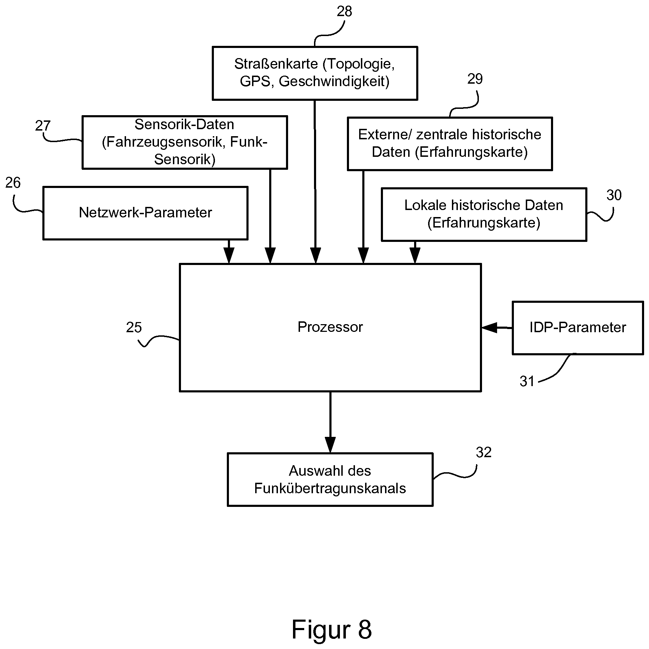

In der Figur 8 ist ein Strukturdiagramm für einen Prozess zur Auswahl eines Funkübertragungskanals aus einer Gruppe verschiedener Funkübertragungskanäle in einer mobilen Einheit veranschaulicht, das für die oben beschriebenen Prozessvarianten eingesetzt werden kann. Dazu ist in der mobilen Einheit, beispielsweise in der in Figur 1 gezeigten Kommunikationssteuerung 180, ein Prozessor 25 vorgesehen, der ein entsprechendes, das Auswahlverfahren bewirkende Computerprogramm ausführt. Zur Steuerung des Auswahlverfahrens werden zudem diverse Daten in den Prozessor 25 geladen. Es werden insbesondere Steuerungsparameter 31 in den Prozessor 25 geladen, so genannte intelligente Datenplanungsparameter (IDP-Parameter), durch die beispielsweise ein bestimmter von verschiedenen durch das Computerprogramm unterstützten Auswahlalgorithmen für das Auswahlverfahren angewandt wird. Weiterhin werden zu den einzelnen, in der Gruppe verfügbaren Funkübertragungskanälen entsprechende, insbesondere von der Zentraleinheit, den lokalen Einheiten und/oder der mobilen Einheit bereit gestellte Netzwerk-Parameter 26 in den Prozessor 25 geladen. Weiterhin werden Sensorik-Daten 27, die insbesondere in der mobilen Einheit erfasst werden, in den Prozessor 25 geladen. Dies können beispielsweise Daten einer funkspezifischen Sensorik oder Daten einer fahrzeugspezifischen Sensorik sein. Zudem können Straßenkarten-Daten 28 in den Prozessor 25 geladen werden, beispielsweise zur Topologie des Gebiets, in dem sich die mobile Einheit aktuell befindet oder das es aufgrund einer in einem Navigationssystem geladenen Fahrtroute erreichen wird, sowie entsprechende Sensor-Daten zum aktuellen Aufenthaltsort wie Global Positioning System (GPS) Daten oder davon abgeleitete Daten wie Geschwindigkeitsdaten. Weiterhin können in den Prozessor 25 externe Daten 29 geladen werden, die von einer bezüglich der mobilen Einheit externen Datenquelle wie beispielsweise der Zentraleinheit bereitgestellt und von dort abgerufen werden.

Sowohl die externen Daten als auch die lokalen Daten können historische Daten sein, wobei sie insbesondere bei früheren Funkverbindungen in demselben örtlichen Bereich, in dem sich die mobile Einheit aktuell befindet, zu denselben Funkübertragungskanälen erfasst und dann abgespeichert wurden. Die historischen Daten können aber auch auf anderen Randbedingungen aufbauen, beispielsweise auf eine Zeitangabe, wonach beispielsweise ein bestimmter Funkübertragungskanal in einem bestimmten Zeitraum stark ausgelastet und dann relativ schlecht verfügbar ist. Eine entsprechende Datensammlung, in der historische Daten zu einer Vielzahl von örtlichen Bereichen bzw. Gebieten gespeichert ist, kann als Erfahrungskarte bereit gestellt werden. Entsprechende historische Daten, die in der mobilen Einheit gespeichert sind und insbesondere aus Messwerten gebildet wurden, die durch Sensoren der mobilen Einheit erfasst wurden, können ebenfalls als lokale historische Daten 30 in den Prozessor 25 geladen werden.

Wenn das im Prozessor 25 ausgeführte Computerprogramm die jeweiligen geladenen Daten verarbeitet hat, wird zumindest ein Datensatz oder ein Steuerungswert 32 ausgegeben, mit dem in der mobilen Einheit die Auswahl eines Funkübertragungskanals aus der Gruppe der zur Verfügung stehenden Funkübertragungskanäle erfolgt, insbesondere durch Umschalten der mobilen Einheit auf das jeweilige Kommunikationsmodul des jeweiligen Funkübertragungskanals.

Folgende Kategorien von Informationen können für die Auswahl des Funkübertragungskanals jeweils einzeln oder in Kombination herangezogen werden:

- Verkehrsinformation
- Netzauslastung
- Verfügbarkeitskarte
- Erfahrungskarte und/oder
- Straßenkarte.

Die jeweiligen Informationen können georeferenziert sein, so dass insgesamt eine komplexe, mehrschichtige Informationslandschaft bzw. Kartenlandschaft erstellt werden kann. Die jeweiligen Informationen können aktuelle Daten und/oder historische Daten umfassen.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen. Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines elektronisch lesbaren Datenträgers bereit gestellt werden.

**Patentansprüche**

**1.** Verfahren zur Übertragungskanalwahl in einer Mehrantennen-Netzwerk-Funkverbindung, mit der Daten mittels Funksignalen zwischen einer Funk-Basisstation (2, 120a, 120b, 130a, 140a) und einem mobilen Endgerät (17, 170, 1700) übertragen werden, wobei- die Funk-Basisstation (2, 120a, 120b, 130a, 140a) und das mobile Endgerät (17, 170, 1700) jeweils mindestens zwei Antennen (4, 5, 6, 7) aufweisen, durch die sich für die Funkverbindung mehrere Übertragungspfade (8, 9, 10, 11) und für die Datenübertragung mindestens zwei Übertragungskanäle ausbilden, die jeweils einen oder mehrere der Übertragungspfade (8, 9, 10, 11) entsprechend einer Kanalmatrix nutzen,

- das mobile Endgerät (17, 170, 1700) mindestens einen Dekoder (16) aufweist, mit dem von mindestens einer der Endgeräte-Antennen (6, 7) empfangene Funksignale zum Gewinnen der Daten dekodierbar sind, und
- mit der Übertragungskanalwahl entschieden wird, über welchen oder welche der Übertragungspfade und mit welcher Kommunikationssystem-Technologie die Übertragung der Daten zwischen Funk-Basisstation (2, 120a, 120b, 130a, 140a) und mobilem Endgerät (17, 170, 1700) erfolgt,

umfassend folgende Schritte:

- von der Mobilfunk-Basisstation (2, 120a, 120b, 130a, 140a) werden über die Übertragungspfade (8, 9, 10, 11) zum mobilen Endgerät (17, 170, 1700) Mobilfunksignale für erste Daten in mindestens zwei unterschiedlichen Kommunikationssystem-Technologien übertragen,
- die Mobilfunksignale werden dem Dekoder (16) übertragungskanalweise zugeführt,
- der Dekoder (16) dekodiert die Mobilfunksignale und gewinnt dabei übertragungskanalweise die ersten Daten,
- mittels der dekodierten ersten Daten wird übertragungskanalweise mindestens ein Gütewert gebildet, der repräsentativ ist für eine Güte der Datenübertragung über den jeweiligen Übertragungskanal und
- wobei die Auswahl des Übertragungskanals anhand eines Vergleichs der Gütewerte der Übertragungskanäle erfolgt und die Übertragungskanalwahl zur nachfolgenden Übertragung zweiter Daten erfolgt, die Nutzdaten bilden.

**2.** Verfahren nach Anspruch 1, wobei zur Entscheidung, über welchen oder welche der Übertragungspfade (8, 9, 10, 11) die Übertragung der Daten zwischen Funk-Basisstation (2, 120a, 120b, 130a, 140a) und mobilem Endgerät (17, 170, 1700) erfolgt, Koeffizienten der Kanalmatrix anhand der dekodierten ersten Daten zumindest abgeschätzt werden.

3. Verfahren nach Anspruch 1 oder 2, wobei zumindest eine Antenne (4, 5) der Funk-Basisstation (2, 120a, 120b, 130a, 140a) und eine Antenne (6, 7) des mobilen Endgeräts (17, 170, 1700) zur Übertragung von Daten auf Basis von mindestens zwei unterschiedlichen Kommunikationssystem-Technologien eingerichtet ist.

4. Verfahren nach einem der vorher gehenden Ansprüche, wobei zur Bestimmung des Gütewerts zumindest die Datenübertragungsrate, eine auf Basis der Kanalmatrix ermittelte Konditionszahl des Übertragungskanals und/oder die spektrale Effizienz des Übertragungskanals erfasst und verwendet werden.

5. Verfahren nach einem der vorher gehenden Ansprüche, wobei zur Bestimmung des Gütewerts eine Integration über eine vorgegebene Empfangsbandbreite und über zumindest einen Teil einer Präambel eines für die Funkverbindung verwendeten Übertragungsprotokolls erfolgt.

6. Verfahren nach einem der vorher gehenden Ansprüche, wobei zu mehreren verfügbaren Übertragungspfaden (8, 9, 10, 11) eine Kanalmatrix gebildet wird.

7. Verfahren nach einem der vorher gehenden Ansprüche, wobei die Netzwerk-Funkverbindung eine Mobilfunkverbindung oder eine WLAN-Verbindung ist.

8. Verfahren nach einem der vorhergehenden Ansprüche, wobei die Funk-Basisstation (2, 120a, 120b, 130a, 140a) eine stationäre Station ist und das mobile Endgerät (17, 170, 1700) fest mit einem Kraftfahrzeug verbunden ist.

9. Verfahren nach einem der Ansprüche 1 bis 8, zur Auswahl eines Übertragungskanals aus einer Gruppe von Übertragungskanälen, die jeweils unterschiedlichen Kommunikationssystem-Technologien entsprechen und/oder verschiedene Infrastruktur-Komponenten nutzen, zur Herstellung einer Datenverbindung zwischen dem mobilen Endgerät (17, 170, 1700) und einer Zentraleinheit (6), wobei

- die Zentraleinheit (6) mit einer ersten in einem örtlichen Bereich (A, B) angeordneten lokalen Einheit (2, 120a, 120b, 130a, 140a) verbindbar ist, über die eine Datenübertragungsverbindung zu dem mobilen Endgerät (17, 170, 1700) mittels eines ersten Übertragungskanals erstellbar ist, der einer ersten Kommunikationssystem-Technologie der unterschiedlichen Kommunikationssystem-Technologien entspricht und/oder eine erste Infrastruktur-Komponente nutzt,
- die Zentraleinheit (6) mit einer zweiten, in dem örtlichen Bereich (A, B) angeordneten lokalen Einheit (2, 120a, 120b, 130a, 140a) verbindbar ist, über die eine Verbindung zu dem mobilen Endgerät (17, 170, 1700) mittels eines zweiten Übertragungskanals herstellbar ist, der einer zweiten Kommunikationssystem-Technologie der unterschiedlichen Kommunikationssystem-Technologien entspricht und/oder eine zweite Infrastruktur-Komponente nutzt,
- wobei das mobilen Endgerät (17, 170, 1700) mindestens zwei Funkeinheiten (9, 10, 11) aufweist, die jeweils für eine Datenübertragung über einen der beiden Übertragungskanäle ausgebildet sind, und
- wobei die Auswahl des Übertragungskanals aus der Gruppe von Übertragungskanälen mittels Steuerungs-Daten erfolgt, die außerhalb des mobilen Endgeräts (17, 170, 1700) erzeugt und/oder gespeichert werden.

10. Verfahren nach Anspruch 9, wobei die Steuerungsdaten von der Zentraleinheit (6) und/oder mindestens einer der lokalen Einheiten (120a, 130a, 140a) erzeugt, bereitgestellt und/oder; zum mobilen Endgerät (17, 170, 1700) übertragen werden.

11. Verfahren nach Anspruch 9 oder 10, wobei die Auswahl in dem mobilen Endgerät (17, 170, 1700) erfolgt.

12. Verfahren nach einem der vorher gehenden Ansprüche, wobei in dem mobilen Endgerät (17, 170, 1700) und insbesondere in mindestens einer Steuerung des mobilen Endgeräts (17, 170, 1700) mindestens ein Sensor (160a) vorgesehen ist, mit dem für die Qualität der Funkübertragung maßgebliche Messwerte erfasst werden und zur Auswahl des Übertragungskanals verwendet werden.

13. Vorrichtung zur Auswahl eines Übertragungskanals aus einer Gruppe von Übertragungskanälen, umfassend Mittel zum Durchführen eines Verfahrens nach einem der Ansprüche 1 bis 12.

14. Datenübertragungssystem, umfassend eine Vorrichtung nach Anspruch 13.

15. Computerprogrammprodukt zur Auswahl eines Übertragungskanals aus einer Gruppe von Übertragungskanälen, das beim Laden und Ausführen auf einem Computer einer Funk-Basisstation und einem Computer eines mobilen Endgeräts ein Verfahren nach einem der Ansprüche 1 bis 12 bewirkt.

**Claims**

1. Method for transmission channel selection in a multiantenna network radio connection that is used to transmit data by means of radio signals between a radio base station (2, 120a, 120b, 130a, 140a) and a mobile terminal (17, 170, 1700), wherein the radio base station (2, 120a, 120b, 130a, 140a) and the mobile terminal (17, 170, 1700) each have at least two antennas (4, 5, 6, 7) that form a plurality of transmission paths (8, 9, 10, 11) for the radio connection and at least two transmission channels for the data transmission, which each use one or more of the transmission paths (8, 9, 10, 11) in accordance with a channel matrix,

- the mobile terminal (17, 170, 1700) has at least one decoder (16) that can be used to decode radio signals received from at least one of the terminal antennas (6, 7) to obtain the data, and
- the transmission channel selection is used to decide which instance(s) of the transmission paths and which communication system technology are used to transmit the data between the radio base station (2, 120a, 120b, 130a, 140a) and the mobile terminal (17, 170, 1700),

comprising the following steps:

- the mobile radio base station (2, 120a, 120b, 130a, 140a) uses the transmission paths (8, 9, 10, 11) to transmit mobile radio signals for first data to the mobile terminal (17, 170, 1700) using at least two different communication system technologies,
- the mobile radio signals are supplied to the decoder (16) on a transmission-channel-by-transmission-channel basis,
- the decoder (16) decodes the mobile radio signals and in so doing obtains the first data on a transmission-channel-by-transmission-channel basis,
- the decoded first data are used on a transmission-channel-by-transmission-channel basis to form at least one quality value that is representative of a quality of the data transmission via the respective transmission channel, and
- wherein the transmission channel is selected on the basis of a comparison of the quality values of the transmission channels, and the transmission channel selection is made for the subsequent transmission of second data that form useful data.

2. Method according to Claim 1, wherein the decision about which of the transmission paths (8, 9, 10, 11) is/are used to transmit the data between the radio base station (2, 120a, 120b, 130a, 140a) and the mobile terminal (17, 170, 1700) involves at least estimation of coefficients of the channel matrix on the basis of the decoded first data.

3. Method according to Claim 1 or 2, wherein at least one antenna (4, 5) of the radio base station (2, 120a, 120b, 130a, 140a) and one antenna (6, 7) of the mobile terminal (17, 170, 1700) are configured to transmit data on the basis of at least two different communication system technologies.

4. Method according to one of the preceding claims, wherein determination of the quality value involves at least the data transmission rate, a condition number - ascertained on the basis of the channel matrix - of the transmission channel and/or the spectral efficiency of the transmission channel being captured and used.

5. Method according to one of the preceding claims, wherein determination of the quality value involves integration being performed over a prescribed reception bandwidth and over at least one portion of a preamble of a transmission protocol that is used for the radio connection.

6. Method according to one of the preceding claims, wherein a channel matrix is formed for a plurality of available transmission paths (8, 9, 10, 11).

7. Method according to one of the preceding claims, wherein the network radio connection is a mobile radio connection or a WLAN connection.

8. Method according to one of the preceding claims, wherein the radio base station (2, 120a, 120b, 130a, 140a) is a static station and the mobile terminal (17, 170, 1700) is permanently connected to a motor vehicle.

9. Method according to one of Claims 1 to 8, for selecting a transmission channel from a group of transmission channels, which each correspond to different communication system technologies and/or use different infrastructure components, in order to set up a data connection between the mobile terminal (17, 170, 1700) and a central unit (6), wherein

- the central unit (6) can be connected to a first local unit (2, 120a, 120b, 130a, 140a) that is arranged in a regional area (A, B) and that can be used to set up a data transmission connection to the mobile terminal (17, 170, 1700) by means of a first transmission channel that corresponds to a first communication system technology from the different communication system technologies and/or uses a first infrastructure component,
- the central unit (6) can be connected to a second local unit (2, 120a, 120b, 130a, 140a) that is arranged in the regional area (A, B) and that can be used to set up a connection to the mobile terminal (17, 170, 1700) by means of a second transmission channel that corresponds to a second communication system technology from the different communication system technologies and/or uses a second infrastructure component,
- wherein the mobile terminal (17, 170, 1700) has at least two radio units (9, 10, 11) that are each designed for data transmission using one of the two transmission channels, and
- wherein the transmission channel is selected from the group of transmission channels by means of control data that are produced and/or stored outside the mobile terminal (17, 170, 1700) .

10. Method according to Claim 9, wherein the control data are produced, provided and/or transmitted to the mobile terminal (17, 170, 1700) by the central unit (6) and/or at least one of the local units (120a, 130a, 140a).

11. Method according to Claim 9 or 10, wherein the selection is made in the mobile terminal (17, 170, 1700).

12. Method according to one of the preceding claims, wherein the mobile terminal (17, 170, 1700) and particularly at least one controller of the mobile terminal (17, 170, 1700) contains at least one sensor (160a) that is used to capture measured values that are definitive for the quality of the radio transmission and to use them for selecting the transmission channel.

13. Apparatus for selecting a transmission channel from a group of transmission channels, comprising means for performing a method according to one of Claims 1 to 12.

14. Data transmission system, comprising an apparatus according to Claim 13.

15. Computer program product for selecting a transmission channel from a group of transmission channels, which computer program product, when loaded and executed on a computer of a radio base station and a computer of a mobile terminal, prompts a method according to one of Claims 1 to 12.


**Revendications**

1. Procédé pour le choix d'un canal de transmission dans une liaison radio d'un réseau à plusieurs antennes, par laquelle des données sont transmises au moyen de signaux radio entre une station de base radio (2, 120a, 120b, 130a, 140a) et un terminal mobile (17, 170, 1700), dans lequel

- la station de base radio (2, 120a, 120b, 130a, 140a) et le terminal mobile (17, 170, 1700) présentent respectivement au moins deux antennes (4, 5, 6, 7) qui réalisent plusieurs voies de transmission (8, 9, 10, 11) pour la liaison radio et au moins deux canaux de transmission pour la transmission de données qui exploitent respectivement une ou plusieurs des voies de transmission (8, 9, 10, 11) selon une matrice de canaux,
- le terminal mobile (17, 170, 1700) présente au moins un décodeur (16) permettant de décoder des signaux radio reçus d'au moins l'une des antennes de terminal mobile (6, 7) afin d'obtenir les données, et
- le choix du canal de transmission permet de décider sur laquelle ou lesquelles des voies de transmission et avec quelle technologie de système de communication la transmission des données entre la station de base radio (2, 120a, 120b, 130a, 140a) et le terminal mobile (17, 170, 1700) est effectuée, comprenant les étapes suivantes :
- la station de base de téléphonie mobile (2, 120a, 120b, 130a, 140a) transmet au terminal mobile (17, 170, 1700) sur les voies de transmission (8, 9, 10, 11) des signaux de téléphonie mobile pour des premières données selon au moins deux technologies de système de communication différentes,
- les signaux de téléphonie mobile sont amenés au décodeur (16) selon le canal de transmission,
- le décodeur (16) décode les signaux de téléphonie mobile et obtient alors les premières données selon le canal de transmission,
- au moyen des premières données décodées, au moins une valeur de qualité est constituée selon le canal de transmission et représente la qualité de la transmission de données sur le canal de transmission respectif, et
- dans lequel la sélection du canal de transmission est effectuée à l'aide d'une comparaison des valeurs de qualité des canaux de transmission, et le choix de canal de transmission est effectué pour la transmission suivante de deuxièmes données qui sont des données utiles.

2. Procédé selon la revendication 1, dans lequel, pour décider sur laquelle ou lesquelles des voies de transmission (8, 9, 10, 11) la transmission des données entre la station de base radio (2, 120a, 120b, 130a, 140a) et le terminal mobile (17, 170, 1700) est effectuée, des coefficients de la matrice de canaux sont au moins estimés à l'aide des premières données décodées.

3. Procédé selon la revendication 1 ou 2, dans lequel au moins une antenne (4, 5) de la station de base radio (2, 120a, 120b, 130a, 140a) et une antenne (6, 7) du terminal mobile (17, 170, 1700) sont aménagées pour transmettre des données sur la base d'au moins deux technologies de système de communication différentes.

4.  Procédé selon l'une quelconque des revendications précédentes, dans lequel, pour déterminer la valeur de qualité, au moins le débit binaire, un nombre conditionnel du canal de transmission déterminé sur la base de la matrice de canaux et/ou l'efficacité spectrale du canal de transmission sont détectés et utilisés.

5.  Procédé selon l'une quelconque des revendications précédentes, dans lequel, pour déterminer la valeur de qualité, une intégration est effectuée sur une bande passante de réception prédéfinie et sur au moins une partie d'un préambule d'un protocole de transmission utilisé pour la liaison radio.

6.  Procédé selon l'une quelconque des revendications précédentes, dans lequel une matrice de canaux est formée pour plusieurs voies de transmission disponibles (8, 9, 10, 11).

7.  Procédé selon l'une quelconque des revendications précédentes, dans lequel la liaison radio de réseau est une liaison de téléphonie mobile ou une liaison WLAN.

8.  Procédé selon l'une quelconque des revendications précédentes, dans lequel la station de base radio (2, 120a, 120b, 130a, 140a) est une station stationnaire et le terminal mobile (17, 170, 1700) est relié solidement à un véhicule automobile.

9.  Procédé selon l'une quelconque des revendications 1 à 8 pour sélectionner un canal de transmission dans un groupe de canaux de transmission qui correspondent respectivement à différentes technologies de système de communication et/ou utilisent différents composants d'infrastructure, afin d'établir une liaison de données entre le terminal mobile (17, 170, 1700) et une unité centrale (6), dans lequel

    - l'unité centrale (6) peut être reliée à une première unité locale (2, 120a, 120b, 130a, 140a) disposée dans une zone locale (A, B) et qui permet d'établir une liaison de transmission de données avec le terminal mobile (17, 170, 1700) au moyen d'un premier canal de transmission qui correspond à une première technologie de système de communication des différentes technologies de système de communication et/ou utilise un premier composant d'infrastructure,
    - l'unité centrale (6) peut être reliée à une deuxième unité locale (2, 120a, 120b, 130a, 140a) disposée dans la zone locale (A, B) et qui permet d'établir une liaison avec le terminal mobile (17, 170, 1700) au moyen d'un deuxième canal de transmission qui correspond à une deuxième technologie de système de communication des différentes technologies de système de communication et/ou utilise un deuxième composant d'infrastructure,
    - dans lequel le terminal mobile (17, 170, 1700) présente au moins deux unités radio (9, 10, 11) qui sont réalisées respectivement pour une transmission de données sur l'un des deux canaux de transmission, et
    - dans lequel la sélection du canal de transmission dans le groupe de canaux de transmission est effectuée au moyen de données de commande qui sont générées et/ou stockées en dehors du terminal mobile (17, 170, 1700).

10. Procédé selon la revendication 9, dans lequel les données de commande sont produites, fournies et/ou transmises au terminal mobile (17, 170, 1700) par l'unité centrale (6) et/ou par au moins l'une des unités locales (120a, 130a, 140a).

11. Procédé selon la revendication 9 ou 10, dans lequel la sélection est effectuée dans le terminal mobile (17, 170, 1700).

12. Procédé selon l'une quelconque des revendications précédentes, dans lequel au moins un capteur (160a) est prévu dans le terminal mobile (17, 170, 1700), et en particulier dans au moins un contrôleur du terminal mobile (17, 170, 1700), qui permet de détecter des valeurs de mesure déterminantes pour la qualité de la transmission radio et de les utiliser pour la sélection du canal de transmission.

13. Dispositif pour la sélection d'un canal de transmission dans un groupe de canaux de transmission, comprenant des moyens pour effectuer un procédé selon l'une quelconque des revendications 1 à 12.

14. Système de transmission de données, comprenant un dispositif selon la revendication 13.

15. Produit de programme informatique pour la sélection d'un canal de transmission dans un groupe de canaux de transmission qui, lorsqu'il est chargé et exécuté sur un ordinateur d'une station de base radio et un ordinateur d'un terminal mobile, déclenche un procédé selon l'une quelconque des revendications 1 à 12.

Figur 1

Figur 2

Figur 3

Figur 4

Figur 5

Figur 6

EP 2 979 371 B1

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090059861 A1
- US 20110267969 A1
- US 20080242251 A1

- US 20120220238 A1
- US 20130072189 A1
- US 8400974 B2